# EUROPEAN PATENT APPLICATION

(11) **EP 4 738 979 A1**
(43) Date of publication of application: **06.05.2026**
(21) Application number: 24209668.3
(22) Date of filing: 30.10.2024
(51) Int. Cl.: H04W 76/27, H04W 72/21, H04W 72/23, H04W 48/20

(54) **IMPROVED RADIO RESOURCE CONFIGURATION PROFILE HANDLING**

(71) Applicant: Nokia Technologies Oy, 02610 Espoo (FI)
(72) Inventor: HENTTONEN, Tero, Espoo (FI); KESKITALO, Ilkka Antero, Oulu (FI); JAYAWARDANA, Palihawadana Arachchige Dinu Nirmal, Espoo (FI)
(74) Representative: Nokia EPO representatives

(57) **Abstract**

The disclosure inter alia relates to an apparatus. The apparatus may comprise means for receiving, from a network node, an indication of at least one radio resource configuration profile at least a part of which is to be retained by the apparatus in an inactive radio state of the apparatus. Alternatively or in addition, the apparatus may comprise means for determining the at least one radio resource configuration profile at least a part of which is to be retained by the apparatus in the inactive radio state of the apparatus. The apparatus may further comprise means for retaining at least a part of the at least one radio resource configuration profile in the inactive radio state of the apparatus. The apparatus may further comprise means for discarding at least a part of at least one further radio resource configuration profile.

## Description

### TECHNOLOGICAL FIELD

Various example embodiments relate to wireless communication networks, in particular to handling radio resource configuration profiles in such networks.

### BACKGROUND

In a wireless communication network, one or more protocols may be used, e.g. in order to control a data transmission between a user equipment (UE) and the wireless communication network. A configuration profile of such a protocol may include, e.g., one or more configurations, parameters, and/or settings for controlling the data transmission. Examples of wireless communication networks comprise cellular networks such as networks operating according to Universal Mobile Telecommunications System (UMTS), Long Term Evolution (LTE), 5G, or 6G radio access technology. 5G radio access technology may also be referred to as New Radio (NR) access technology. An example of a protocol used in UMTS/LTE/NR for controlling radio resources in said networks is the Radio Resource Control (RRC) protocol. The 3rd Generation Partnership Project, 3GPP, develops standards for LTE, 5G/NR and 6G. One of the topics discussed within 3GPP is how to further improve a handling of configuration profiles, in particular radio resource configuration profiles.

### SUMMARY OF SOME EXAMPLE EMBODIMENTS

A user equipment (UE) may be in different states with respect to a radio link of the UE with a wireless communication network. Examples of such radio states include an idle, an inactive and a connected radio state, respectively. The connected radio state may be characterized by a relatively high UE activity, e.g. with respect to signaling and measurements, as compared with the idle or the inactive radio state. Such a relatively high UE activity may negatively affect an overall operation time of the UE due to the amount of energy consumed by the UE. Therefore, it may seem expedient for the UE to transition to other radio states such as, e.g. the idle or the inactive radio state from time to time, e.g. when no active data exchange is taking place.

However, in particular relatively frequent transitions between a connected radio state and other radio states may introduce several drawbacks, such as an increased signaling overhead, an increase in time consumption, and added delays, e.g. due to the need for reconfiguring the radio link of the UE with the wireless communication network. While continuously keeping the UE in a connected radio state may mitigate some of the aforementioned issues, this may not always be desirable, e.g. when no active data exchange is taking place, e.g. for a relatively long period of time. In particular, continuously keeping the UE in a connected radio state may lead to a lower energy efficiency of both the UE and the wireless communication network.

In view of the above, it may be desirable to handle one or more radio resource configuration profiles in an advantageous manner when transitioning between different radio states.

Given this, certain embodiments of the disclosure may have the effect of enabling an improved handling of radio resource configuration profiles (e.g. in 6G), e.g. when transitioning between different radio states. In particular, certain embodiments of the disclosure may enable an apparatus (e.g. a UE) to retain (e.g. store) at least parts of some radio resource configuration profiles in an inactive radio state of the apparatus and to discard (e.g. delete) at least parts of some other radio resource configuration profiles, thereby conserving storage, radio and/or power resources at the apparatus and/or at the wireless communication network while reducing signaling overhead, consumed time, and/or delays when exchanging data between the apparatus and the network, thus enabling an improved handling of radio resource configuration profiles.

According to a first example aspect, there is disclosed an apparatus. The apparatus may comprise means for receiving, from a network node, an indication of at least one radio resource configuration profile at least a part of which is to be retained by the apparatus in an inactive radio state of the apparatus. The apparatus may further comprise means for retaining at least a part of the at least one radio resource configuration profile in the inactive radio state of the apparatus. The apparatus may further comprise means for discarding at least a part of at least one further radio resource configuration profile.

Alternatively or in addition to the means for receiving, from the network node, the indication of the at least one radio resource configuration profile, the apparatus may comprise means for determining the at least one radio resource configuration profile at least a part of which is to be retained by the apparatus in the inactive radio state of the apparatus.

The apparatus according to the first example aspect may be or may comprise a user equipment (UE). Further, the network node from which the indication may be received may be or may be comprised by an apparatus according to a second example aspect, as further described herein.

According to a second example aspect, there is disclosed an apparatus. The apparatus may comprise means for indicating, to a user equipment, at least one radio resource configuration profile at least a part of which is to be retained by the user equipment in an inactive radio state of the user equipment, wherein at least a part of at least one further radio resource configuration profile is to be discarded by the user equipment.

The apparatus according to the second example aspect may be or may comprise a network entity such as, e.g., a network node. Further, the user equipment to which the at least one radio resource configuration profile may be indicated may be or may be comprised by an apparatus according to the first example aspect.

According to a third example aspect, there is disclosed an apparatus. The apparatus may comprise means for receiving, from a network node, an indication of at least one retained radio resource configuration profile at least a part of which has been retained by a user equipment in an inactive radio state of the user equipment. The apparatus may further comprise means for determining, based on the at least one retained radio resource configuration profile and at least one radio resource configuration profile stored by the apparatus, at least one still valid radio resource configuration profile. The apparatus may further comprise means for indicating the at least one still valid radio resource configuration profile to the network node.

The apparatus according to the third example aspect may be or may comprise a (e.g. further) network entity such as, e.g., a (further) network node. Further, the network node from which the indication of the at least one retained radio resource configuration profile may be received may be or may be comprised by an apparatus according to the second example aspect. Further, the user equipment by which the at least a part of the at least one retained radio resource configuration profile has been retained may be or may be comprised by an apparatus according to the first example aspect.

Any of the disclosed devices (e.g., the apparatus according to the first example aspect, the apparatus according to the second example aspect, and/or the apparatus according to the third example aspect) may be a stationary device or a mobile device.

A user equipment (an example of the apparatus according to the first example aspect) may in particular be a terminal device, e.g. a mobile device such as a smartphone, a tablet, a wearable, a smartwatch, a low power device, an IoT device, an IIoT device, a vehicle, a truck, a drone, an airplane, or the like. A user equipment may in particular be capable of communicating with (transmitting and/or receiving signals and/or data to/from) one or more other user equipments and/or with one or more network nodes, such as a base station of a wireless communication network. Generally, a user equipment may be any device enabled for communication with a wireless communication network and/or with another user equipment.

A network node (an example of the apparatus according to the second example aspect and of the apparatus according to the third example aspect) may be understood as a wireless communication station installed at a fixed or mobile location and may in particular be or comprise an entity of a radio access network of a wireless communication system. For instance, a network node may be, comprise, or be part of a base station of a wireless communication network of any generation (e.g. a gNB, eNodeB, NodeB, BTS or the like) of a 3GPP standard. Generally, a network node may be or comprise a hardware or software component implementing a certain functionality. In an example, a network node may be an entity as defined by 3GPP 5G or NR standard (also referred to as gNB). Accordingly, while a network node may be understood to be implemented in or be a single device or module, a network node may also be implemented across or comprise multiple devices or modules. As such, a network node may in particular be implemented in or be a stationary device. Multiple network nodes may in particular establish a wireless communication system or network, which may in particular be an NR or 5G system (5GS) or any other wireless communications system defined by a past or future standard, in particular successors of the present 3GPP standards. Network nodes may be capable of being in direct and/or indirect communication with user equipment.

According to each of the example aspects, a respective method is also disclosed.

Thus, according to the first example aspect, there is disclosed a method performed by an apparatus. The method may comprise receiving, from a network node, an indication of at least one radio resource configuration profile at least a part of which is to be retained by the apparatus in an inactive radio state of the apparatus. The method may further comprise retaining at least a part of the at least one radio resource configuration profile in the inactive radio state of the apparatus. The method may further comprise discarding at least a part of at least one further radio resource configuration profile.

Alternatively or in addition to receiving, from the network node, the indication of the at least one radio resource configuration profile, the method may comprise determining the at least one radio resource configuration profile at least a part of which is to be retained by the apparatus in the inactive radio state of the apparatus.

The apparatus by which the method according to the first example aspect is performed may be or may comprise a user equipment (UE).

According to the second example aspect, there is disclosed a method performed by an apparatus. The method may comprise indicating, to a user equipment, at least one radio resource configuration profile at least a part of which is to be retained by the user equipment in an inactive radio state of the user equipment, wherein at least a part of at least one further radio resource configuration profile is to be discarded by the user equipment.

The apparatus by which the method according to the second example aspect is performed may be or may comprise a network entity such as, e.g., a network node.

According to the third example aspect, there is disclosed a method performed by an apparatus. The method may comprise receiving, from a network node, an indication of at least one retained radio resource configuration profile at least a part of which has been retained by a user equipment in an inactive radio state of the user equipment. The method may further comprise determining, based on the at least one retained radio resource configuration profile and at least one radio resource configuration profile stored by the apparatus, at least one still valid radio resource configuration profile. The method may further comprise indicating the at least one still valid radio resource configuration profile to the network node.

The apparatus by which the method according to the third example aspect is performed may be or may comprise an (e.g. further) network entity such as, e.g., a (further) network node.

According to the example aspects of the present disclosure, there is in each case also disclosed a computer program comprising instructions, which, when executed by an apparatus, cause the apparatus to perform the method of the respective aspect.

The computer program may in each case be stored on a computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

Thus, according to the example aspects of the present disclosure, there is in each case also disclosed a computer-readable storage medium having stored thereon the computer program of the respective aspect.

Any disclosure herein relating to any example aspect is to be understood to be equally disclosed with respect to any subject-matter according to the respective example aspect, e.g. relating to an apparatus, a method, a computer program, and a computer-readable storage medium. For example, the disclosure of means for performing and/or causing to perform a method or method step shall also be considered as a disclosure of the method or method step itself. Likewise, the disclosure of a method or a method step shall also be considered as a disclosure of means for performing and/or causing to perform the respective method or method step. Further, any passage describing a method or method step is to be understood as disclosing at least one processor; and at least one memory storing instructions that, when executed by the at least one processor, cause the apparatus at least to perform the method or method step. The same holds the other way around, i.e., any passage describing at least one processor; and at least one memory storing instructions that, when executed by the at least one processor, cause the apparatus at least to perform a step is to be understood as disclosing the step as a method step itself.

Specifically, an apparatus (e.g., the apparatus according to the first example aspect, the apparatus according to the second example aspect, and/or the apparatus according to the third example aspect) is disclosed, configured to carry out, perform and/or control or comprising respective means for performing and/or controlling the method according to any of the above-mentioned example aspects. Further, an apparatus (e.g., the apparatus according to the first example aspect, the apparatus according to the second example aspect, and/or the apparatus according to the third example aspect) is disclosed comprising at least one processor; and at least one memory storing instructions that, when executed by the at least one processor, cause the apparatus at least to perform the method according to any aspect.

The apparatus according to any aspect may comprise means for performing the specified method or steps.

In general, the means or functionality of any of the disclosed devices or apparatuses (e.g., the apparatus according to the first example aspect, the apparatus according to the second example aspect, and/or the apparatus according to the third example aspect) may be implemented in hardware and/or software. They may comprise one or multiple modules or units providing the respective functionality. They may for instance comprise at least one processor for executing computer program code for performing the required functions, at least one memory storing the program code, or both. They could comprise for instance circuitry that is designed to implement the required functions, for instance implemented in a chipset or a chip, like an integrated circuit. In general, the means may comprise for instance one or more processors.

Specific means may be used to implement specific functions/functionalities/features, e.g. receiving means for receiving, from a network node, an indication of at least one radio resource configuration profile at least a part of which is to be retained by the apparatus in an inactive radio state of the apparatus, retaining means for retaining at least a part of the at least one radio resource configuration profile in the inactive radio state of the apparatus, and/or discarding means for discarding at least a part of at least one further radio resource configuration profile (said means may for example be comprised by the apparatus according to the first example aspect).

Further examples of specific means may comprise, e.g., indicating means for indicating, to a user equipment, at least one radio resource configuration profile at least a part of which is to be retained by the user equipment in an inactive radio state of the user equipment, wherein at least a part of at least one further radio resource configuration profile is to be discarded by the user equipment (said means may for example be comprised by the apparatus according to the second example aspect).

Further examples of specific means may comprise, e.g., receiving means for receiving, from a network node, an indication of at least one retained radio resource configuration profile at least a part of which has been retained by a user equipment in an inactive radio state of the user equipment, determining means for determining, based on the at least one retained radio resource configuration profile and at least one radio resource configuration profile stored by the apparatus, at least one still valid radio resource configuration profile, and/or indicating means for indicating the at least one still valid radio resource configuration profile to the network node (said means may for example be comprised by the apparatus according to the third example aspect).

Thus, according to the respective example aspects of the present disclosure, there is in each case also disclosed a respective apparatus comprising means for performing a method according to the respective aspect of the present disclosure.

Any of the above-disclosed example aspects may in general be performed by an apparatus, which may be a module or a component for a device, for example a chip. Alternatively, as mentioned above, the apparatus may be a terminal device or a network node.

The apparatus according to any aspect may comprise only (i.e., consist of) the disclosed components, for instance means, processor, memory, circuitry, or may further comprise one or more additional components.

The described aspects may be advantageous in terms of at least one of speed, efficiency, in particular with respect to storage and/or radio resources, or power consumption. More specifically, by retaining (e.g. storing) at least parts of some radio resource configuration profiles in the inactive radio state and/or by discarding (e.g. deleting) at least parts of some other radio resource configuration profiles, various resources (e.g., storage, radio and/or power resources) may be conserved at the apparatus and/or at the wireless communication network while reducing signaling overhead, consumed time, and/or delays when exchanging data between the apparatus and the network, thus enabling an improved handling of radio resource configuration profiles.

The aforementioned advantages may in particular be achieved by the apparatus (e.g. a UE) retaining at least a part of the at least one radio resource configuration profile indicated by the network node in the inactive radio state and/or by the apparatus discarding at least a part of at least one further radio resource configuration profile, e.g. not indicated by the network node. In this way, e.g., radio resource configuration profiles not indicated by the network may be removed from a storage of the apparatus and/or of a network entity (e.g., the network node), thereby advantageously conserving storage resources.

For example, some profiles may be intended by the wireless communication network to be valid only temporarily and/or may be intended only for a connected radio state, and/or may be valid only in some cells. The described aspects may therefore in particular allow for aligning profiles stored by the apparatus with profiles stored by the wireless communication network, thereby conserving UE and/or network resources.

At the same time, by retaining at least a part of the at least one radio resource configuration profile in the inactive radio state, a signaling overhead, a consumed time, and/or a delay when exchanging data between the apparatus and the wireless communication network, e.g. at a later point in time, may advantageously be reduced, e.g. by (re-)using the retained radio resource configuration profile.

With respect to the second aspect (e.g., on the network side), the aforementioned advantages may in particular be achieved by indicating, to a user equipment, at least one radio resource configuration profile at least a part of which is to be retained by the user equipment in an inactive radio state of the user equipment, wherein at least a part of at least one further radio resource configuration profile is to be discarded by the user equipment.

With respect to the third aspect, the aforementioned advantages may in particular be achieved by indicating, by an apparatus (e.g., a network node having been connected to a user equipment), at least one still valid radio resource configuration profile to a network node (e.g., a network node now being connected to the user equipment), the at least one still valid radio resource configuration profile having in particular been determined based on at least one retained radio resource configuration profile having been retained by the user equipment in an inactive radio state of the user equipment. In this way, it may e.g. be indicated to the network node now being connected to the UE, by the network node having previously been connected to the UE, which profiles are still stored by the UE, thereby allowing for conserving resources (e.g., storage, radio and/or power resources) at the network node, e.g. by discarding profiles which are not valid anymore.

The apparatuses, methods, computer programs and/or storage media in accordance with the described aspects may for instance correspond to apparatuses, methods, computer programs and/or storage media for 6G (e.g. standardized in 3GPP Rel-21 or beyond).

The indication of the at least one radio resource configuration profile may for instance comprise or correspond to information indicative of the at least one radio resource configuration profile, e.g. information identifying a respective one of the at least one radio resource configuration profile. For example, said indication may comprise or correspond to a list of respective identifiers (e.g., IDs) for identifying a respective one of the at least one radio resource configuration profile. Each of the at least one radio resource configuration profile may comprise, and/or be identifiable by, a respective identifier. The at least one radio resource configuration profile may for instance comprise n radio resource configuration profiles.

The at least one radio resource configuration profile may be or may have been selected among plural radio resource configuration profiles of the apparatus (e.g., stored on the apparatus), e.g. by a network entity (e.g., the network node). Thus, the at least one radio resource configuration profile may in particular be a subset of the plural radio resource configuration profiles of the apparatus. The at least one radio resource configuration profile may be referred to as the at least one radio resource configuration profile indicated to be retained.

A radio resource configuration profile may for instance comprise, be based on and/or be indicative of one or more radio resource configurations, one or more radio resource parameters and/or one or more radio resource settings. In other words, the one or more radio resource configurations, radio resource parameters, and/or radio resource settings may be collectively referred to as a radio resource configuration profile. A radio resource configuration profile (e.g., each of the at least one radio resource configuration profile) may comprise or consist of one or more radio resource configuration profile components (e.g., *n*_{comp} radio resource configuration profile components). Alternatively or in addition, a radio resource configuration profile may be modular. Each of a radio resource configuration, a radio resource parameter and/or a radio resource setting may be configured for controlling radio resources (e.g. of a wireless communication network).

As used herein, a radio resource configuration profile may in particular comprise or correspond to a Radio Resource Control (RRC) profile. Similarly, as used herein, a radio resource configuration may in particular comprise or correspond to an RRC configuration. Thus, the at least one radio resource configuration profile, the at least one further radio resource configuration profile, the at least one retained radio resource configuration profile, the at least one past radio resource configuration profile and/or the at least one still valid radio resource configuration profile may for instance comprise or correspond to at least one RRC profile, at least one further RRC profile, at least one retained RRC profile, at least one past RRC profile and/or at least one still valid RRC profile, respectively. A respective radio resource configuration profile may thus for instance comprise, be based on and/or be indicative of one or more RRC configurations, RRC parameters and/or RRC settings. Alternatively or in addition, a respective radio resource configuration profile may comprise, be based on and/or be indicative of one or more configurations, parameters and/or settings of at least one further radio layer (or protocol), e.g. the MAC (Medium Access Control) layer/protocol and/or the PHY (Physical) layer/protocol. In other words, while a respective radio resource configuration profile may for example configure one or more RRC parameters and/or RRC settings, alternatively or in addition, a respective radio resource configuration profile may configure one or more parameters and/or settings of the MAC layer/ protocol and/or one or more parameters and/or settings of the PHY layer/protocol.

It is, however, to be understood that an RRC profile represents only an example of a radio resource configuration profile as used herein. Generally, as used herein, a radio resource configuration profile may comprise or correspond to a profile for configuring radio resources, e.g. of a particular radio access technology. Alternatively or in addition, a radio resource configuration profile may configure one or more radio measurements (e.g., to be performed by the apparatus). In other words, alternatively or in addition, a radio resource configuration profile may comprise, be based on and/or be indicative of a measurement configuration of the apparatus. A measurement configuration may comprise or correspond to a set of parameters or settings defining one or more types of radio measurements the apparatus may be required to perform (e.g. signal strength measurements, signal quality measurements, reporting criteria and/or measurement objects such as neighboring cells or carriers), one or more measurement frequencies (e.g., how often a measurement is to be performed), and/or one or more radio signal quantities to be measured. Configuring radio measurements may allow for configuring a desired operational mode of an apparatus (e.g., a UE), e.g. in order to enhance its energy efficiency.

The indication of the at least one radio resource configuration profile may be comprised by a radio resource control message (e.g., an RRC resume message or an RRC release message) and/or by a suspension configuration information (e.g., a SuspendConfig Information Element (IE)) received from the network node. Correspondingly, the apparatus may comprise means for receiving a radio resource control message and/or means for receiving a suspension configuration information. The suspension configuration information may for example be received in conjunction with the radio resource control message.

As mentioned, alternatively or in addition to receiving the indication of the at least one radio resource configuration profile from the network node, the apparatus may comprise means for (e.g. itself) determining the at least one radio resource configuration profile at least a part of which is to be retained by the apparatus in the inactive radio state of the apparatus. Thus, while at least one radio resource configuration profile may be indicated to be retained by the network node to the apparatus, alternatively or in addition, at least one radio resource configuration profile may be determined by the apparatus (e.g. itself). The at least one radio resource configuration profile determined by the apparatus may differ from the at least one radio resource configuration profile indicated to the apparatus by the network node. A respective radio resource configuration profile may for instance be determined by the apparatus based on a pattern of an (e.g. previous) usage of the radio resource configuration profile, based on an (e.g. future) applicability of the radio resource configuration profile and/or based on a characteristic (e.g. a capability) of the apparatus.

As mentioned, at least a part of the at least one radio resource configuration profile may have to be retained by the apparatus in an inactive radio state of the apparatus. Thus, for example, a (e.g. respective) part of or all of (e.g. each of) the at least one radio resource configuration profile may have to be retained by the apparatus in the inactive radio state. In other words, (e.g. each of) the at least one radio resource configuration profile may have to be retained in the inactive radio state at least in part.

Retaining a radio resource configuration profile may for instance comprise or correspond to storing the radio resource configuration profile (e.g. continuously and/or at least temporarily), for example in an (e.g. internal) memory of the apparatus. The means for retaining at least a part of the at least one radio resource configuration profile may thus for instance be configured for storing the at least a part of the at least one radio resource configuration profile (e.g. continuously and/or at least temporarily) in the inactive radio state. To this end, the means for retaining at least a part of the at least one radio resource configuration profile may for instance comprise at least one memory. Retaining a radio resource configuration profile may also be referred to as maintaining, preserving and/or keeping the radio resource configuration profile.

Retaining (e.g. part of) a radio resource configuration profile in an inactive radio state may for instance comprise or correspond to retaining the (e.g. part of the) radio resource configuration profile during and/or while being in the inactive radio state. Alternatively or in addition, retaining (e.g. part of) a radio resource configuration profile in an inactive radio state may for instance comprise or correspond to retaining the (e.g. part of the) radio resource configuration profile based on, in response to, or after transitioning (e.g. by the apparatus) to the inactive radio state, e.g. from a connected radio state.

Correspondingly, the means for retaining at least a part of the at least one radio resource configuration profile may be configured for retaining at least a part of the at least one radio resource configuration profile after the apparatus transitioned from a connected radio state to the inactive radio state.

To this end, the apparatus may further comprise means for receiving, from the network node, an indication to transition to the inactive radio state, e.g. from a connected radio state. The indication to transition to the inactive radio state may for instance instruct the apparatus to transition to the inactive radio state. The indication to transition to the inactive radio state may for instance be received in conjunction with or separately from the indication of the at least one radio resource configuration profile. The indication to transition to the inactive radio state may for instance be comprised by a radio resource control message and/or by a suspension configuration information, as further described herein. The apparatus may further comprise means for transitioning to (e.g. entering or re-entering) the inactive radio state, e.g. from a connected radio state, e.g. based on the indication to transition to the inactive radio state (e.g. in response to and/or after having received the indication to transition to the inactive radio state).

As used herein, the inactive radio state may also be referred to as an inactive radio mode. The inactive radio state/mode may also be referred to using capital letters, i.e. as INACTIVE radio state/mode. The inactive radio state/mode may for instance correspond to an RRC inactive state or an RRC inactive mode. The inactive radio state may also be referred to as an RRC _INACTIVE state/mode. The inactive radio state may be understood as an inactive state of a radio connection between the apparatus and a wireless communication network comprising the network node, in particular wherein a context associated with the apparatus is stored and/or wherein a radio bearer is in an inactive state. In the inactive state, the apparatus may for instance be inactive with respect to a radio connection between the apparatus and a wireless communication network.

As mentioned, the apparatus may further comprise means for discarding at least a part of at least one further radio resource configuration profile. Thus, for example, a part of or all of the at least one further radio resource configuration profile (e.g. of each of the at least one further radio resource configuration profile) may be discarded. In other words, the at least one further radio resource configuration profile may be discarded at least in part. The at least one further radio resource configuration profile (e.g. each of the at least one further radio resource configuration profile) may in particular be different from (e.g. each of) the at least one radio resource configuration profile indicated by the network node. In other words, the at least one further radio resource configuration profile discarded by the apparatus may not be indicated to be retained by the network node. Yet put differently, the at least one radio resource configuration profile may not have been selected among the plural radio resource configuration profiles of the apparatus, e.g. by a network entity (e.g., the network node).

Discarding a radio resource configuration profile may for instance comprise or correspond to deleting and/or removing the radio resource configuration profile, for example from an (e.g. internal) memory of the apparatus. The means for discarding at least a part of the at least one further radio resource configuration profile may thus for instance be configured for deleting and/or removing the at least a part of the at least one further radio resource configuration profile in the inactive radio state. Discarding a radio resource configuration profile may also be referred to as dismissing and/or releasing the radio resource configuration profile.

The means for retaining at least a part of the at least one radio resource configuration profile may be configured for only retaining at least a part of the at least one radio resource configuration profile indicated to be retained. In other words, only the at least one radio resource configuration profile indicated to be retained may, at least in part, be retained by the apparatus. In particular in this way, radio resource configuration profiles not indicated by the network may advantageously be removed from a storage of the apparatus, thus saving storage resources of the apparatus.

The apparatus may further comprise:
- means for receiving, from the network node, an indication of at least one retention duration, wherein a respective one of the at least one radio resource configuration profile is to be retained for a respective one of the at least one retention duration,
- wherein the means for retaining at least a part of the at least one radio resource configuration profile are configured for retaining at least a part of a respective one of the at least one radio resource configuration profile for a respective one of the at least one retention duration.

Thereby, a respective one (e.g. each) of the at least one radio resource configuration profile may be associated with a respective one of the at least one retention duration. In other words, a respective one (e.g. each) of the at least one radio resource configuration profile indicated to be retained may be retained for a respective one of the at least one retention duration. Yet put differently, the indication of the at least one retention duration may indicate a duration for which (e.g. how long) a respective one (e.g. each) of the at least one radio resource configuration profile shall be retained, e.g. stored.

To this end, the apparatus may further comprise:
- means for monitoring the at least one retention duration.

The means for monitoring the at least one retention duration may for instance comprise or correspond to one or more timers for monitoring the at least one retention duration. The one or more timers may be comprised by, part of and/or inbuilt in the apparatus. The apparatus may be configured for starting and/or monitoring the one or more timers, e.g. simultaneously.

A number of available timers may be used for determining the at least one retention duration and/or may be used for determining the at least one radio resource configuration profile to be retained by the apparatus. Correspondingly, the means for determining the at least one radio resource configuration profile may be configured for determining the at least one radio resource configuration profile based on a number of means for monitoring the at least one retention duration and/or the means for determining the at least one retention duration may be configured for determining the at least one retention duration based on a number of means for monitoring the at least one retention duration.

For example, if only a limited number of timers is available, the apparatus may, e.g., decide to keep some radio resource configuration profiles (e.g. profiles determined to be highly relevant and/or useful) indefinitely and to allocate the available timers to some other radio resource configuration profiles (e.g. profiles determined to be less relevant and/or useful than the profiles determined to be highly relevant and/or useful).

In this way, a limited number of available timers may be used for releasing profiles determined to be less relevant and/or useful after their respective retention durations have expired (thereby conserving storage resources), while allowing for highly relevant and/or useful profiles to be kept indefinitely (thereby reducing signaling overhead, time delays, etc.).

The indication of the at least one retention duration may in particular be received in conjunction with the indication of the at least one radio resource configuration profile. For example, the indication of the at least one retention duration may (e.g. also) be comprised by the radio resource control message and/or by the suspension configuration information, as further described herein. Alternatively, the indication of the at least one retention duration may be received separately from the indication of the at least one radio resource configuration profile.

As used herein, a retention duration of a radio resource configuration profile may also be referred to as an expiration time or an expiration timer for the radio resource configuration profile. The retention duration of a radio resource configuration profile may for instance be determined (e.g. by a network entity) based on an (e.g. expected) time of validity of the radio resource configuration profile and/or may indicate an (e.g. expected) time of validity of the radio resource configuration profile.

Alternatively or in addition to the means for receiving the indication of the at least one retention duration from the network node, the apparatus may comprise means for determining the at least one retention duration (e.g. itself). Thus, while at least one retention duration may be indicated to the apparatus by the network node, alternatively or in addition, at least one retention duration may be determined by the apparatus (e.g. itself). The at least one retention duration determined by the apparatus may differ from the at least one retention duration indicated to the apparatus by the network node. For example, the apparatus may retain one or more radio resource configuration profile(s) for a retention duration that is longer than a corresponding retention duration having been indicated to the apparatus by the network node for the one or more radio resource configuration profile(s). In other words, the apparatus may for example keep storing one or more radio resource configuration profile(s) even beyond their (e.g. actual) expiration time.

A respective retention duration may for instance be determined by the apparatus based on a pattern of an (e.g. previous) usage of a radio resource configuration profile associated with the respective retention duration (e.g. the radio resource configuration profile for which the respective retention duration is determined), based on an (e.g. future) applicability of the radio resource configuration profile associated with the respective retention duration and/or based on a characteristic (e.g. a capability) of the apparatus.

Alternatively or in addition, a respective retention duration may for instance be determined by the apparatus based on a mobility of the apparatus in the inactive radio state. Correspondingly, the means for determining the at least one retention duration may be configured for determining the at least one retention duration based on a mobility of the apparatus in the inactive radio state.

For example, at least one retention duration may be determined by the apparatus based on the apparatus remaining (e.g. camping), in the inactive radio state, in a cell in which the apparatus transitioned from a connected radio state to the inactive radio state (e.g., a last serving cell). Alternatively or in addition, at least one retention duration may be determined by the apparatus based on the apparatus remaining, in the inactive radio state, in a notification area of a radio access network of the wireless communication network, e.g. a Radio Access Network (RAN) based Notification Area (RNA), and/or in an area within which the at least one radio resource configuration profile may for example be handled (e.g., managed). Alternatively or in addition, at least one retention duration may be determined by the apparatus based on the apparatus moving, in the inactive radio state, from a first cell (e.g., a last serving cell) to a second cell, e.g. within a same notification area of a radio access network of the wireless communication network, or across different notification areas. The retention duration(s) determined based on the apparatus moving from the first cell to the second cell, the apparatus remaining in the RNA and/or the apparatus remaining in the last serving cell may for instance be (e.g. pairwise) different, at least in part. In other words, based on determining whether the apparatus remained in a last serving cell, remained (e.g. only) in an RNA and/or moved in between two cells (examples of the mobility of the apparatus in the inactive radio state), respective radio resource configuration profiles may be determined to be retained by the apparatus for at least in part different retention durations.

In particular this approach enables a more efficient, less complex and less resource-costly mechanism to retain radio resource configuration profiles by both the apparatus and the wireless communication network for respective retention durations that are advantageous in view of the mobility of the apparatus in the inactive radio state.

The apparatus may further comprise:
- means for performing at least one action in response to at least one retention duration of the at least one radio resource configuration profile having expired.

The at least one action may thus be performed in response to one or more retention durations of one or more respective radio resource configuration profiles having expired. For example, the at least one action may be performed in response to a single retention duration of a single radio resource configuration profile having expired or may be performed in response to plural or all retention durations of plural or all radio resource configuration profiles having expired. Alternatively or in addition to performing the action(s) in response to the at least one retention duration having expired, the action(s) may be performed based on the at least one retention duration having expired and/or after the at least one retention duration has expired.

The at least one action that may be performed by the apparatus in response to the one or more retention durations having expired may be indicated by the network node to the apparatus. Alternatively or in addition, the at least one action may be determined by the apparatus (e.g. itself). Correspondingly, the apparatus may further comprise:
- means for determining at least one action to be performed by the apparatus in response to at least one retention duration of the at least one radio resource configuration profile having expired.

The at least one action may comprise at least one of:
- discarding at least a part of at least one of the at least one radio resource configuration profile, wherein a respective retention duration of the at least one of the at least one radio resource configuration profile has expired;
- indicating, to the network node, that the at least one retention duration has expired;
- determining at least one reselected frequency, the at least one reselected frequency being different from at least one currently selected frequency;
- determining at least one modified reselection priority, the at least one modified reselection priority being different from a current reselection priority; or
- modifying a measurement configuration of the apparatus.

The at least a part of the at least one of the at least one radio resource configuration profile may for instance be discarded based on, in response to and/or after the respective retention duration of the at least one of the at least one radio resource configuration profile has expired. Thus, among the at least one radio resource configuration profile indicated to be retained, there may be at least one radio resource configuration profile a respective retention duration of which has expired and at least a part of which is to be discarded based on in response to and/or after its respective retention duration having expired. In other words, if the respective retention duration of a radio resource configuration profile among the at least one radio resource configuration profile is reached, said radio resource configuration profile may be discarded (e.g. released). In this way, one or more radio resource configuration profiles, a respective retention duration of which has expired, may be removed from a storage of the apparatus and/or of a network entity (e.g., the network node), thereby advantageously conserving storage resources.

Alternatively or in addition, it may be indicated to the network node that the at least one retention duration has expired, e.g. in order for the wireless communication network to decide on further steps (e.g. determining at least one action to be performed).

Alternatively or in addition, at least one reselected frequency may be determined, wherein the at least one reselected frequency is different from at least one currently selected frequency. In other words, at least one carrier frequency of a radio link of the apparatus with the wireless communication network may be reselected such that the at least one reselected carrier frequency is different from at least one current carrier frequency of the radio link.

Alternatively or in addition, at least one modified reselection priority may be determined, wherein the at least one modified reselection priority is different from a current reselection priority. In other words, at least one current reselection priority may be modified. Based on the at least one modified reselection priority, the apparatus may for instance transition to a reselected carrier frequency, e.g. automatically (e.g. without an indication from the network node). A reselection priority may comprise or correspond to a relative priority level associated with one or more cells associated with the apparatus and/or with a radio link of the apparatus with the wireless communication network.

Alternatively or in addition, a measurement configuration of the apparatus may be modified. A measurement configuration may comprise or correspond to a set of parameters or settings defining one or more types of radio measurements the apparatus may be required to perform (e.g. signal strength measurements, signal quality measurements, reporting criteria and/or measurement objects such as neighboring cells or carriers), one or more measurement frequencies (e.g., how often a measurement is to be performed), and/or one or more radio signal quantities to be measured, said set of parameters or settings, e.g., being or having been provided to the apparatus by the wireless communication network.

The apparatus may further comprise:
- means for indicating, to the network node, at least one retained radio resource configuration profile at least a part of which has been retained by the apparatus in the inactive radio state.

Indicating the at least one retained radio resource configuration profile to the network node may for instance comprise or correspond to providing information indicative of the at least one retained radio resource configuration profile, e.g. information identifying a respective one of the at least one retained radio resource configuration profile, to the network node. Alternatively or in addition, indicating the at least one retained radio resource configuration profile to the network node may comprise or correspond to transmitting an indication of the at least one retained radio resource configuration profile to the network node. Said indication may for example comprise or correspond to a list of respective identifiers (e.g., IDs) for identifying a respective one of the at least one retained radio resource configuration profile. Each of the at least one retained radio resource configuration profile may comprise, and/or be identifiable by, a respective identifier. The at least one retained radio resource configuration profile may be a subset of the plural radio resource configuration profiles of the apparatus and/or of the at least one radio resource configuration profile indicated to be retained. Thus, the at least one retained radio resource configuration profile may for instance comprise *n*_{retained} radio resource configuration profiles, wherein *n*_{retained} ≤ n.

By indicating the radio resource configuration profile(s) retained by the apparatus to the network node, the wireless communication network may use this information in an advantageous manner, e.g. for performing one or more actions (e.g. retaining the radio resource configuration profile(s) retained by the apparatus) and/or for indicating to the apparatus to perform one or more actions (e.g. continuing to retain the retained radio resource configuration profile(s) or releasing the retained radio resource configuration profile(s)), thereby allowing for a signaling overhead, a consumed time, and/or a delay when exchanging data between the apparatus and the wireless communication network to be advantageously reduced (e.g. by (re-)using the retained radio resource configuration profile) and/or for storage resources of the apparatus and/or of the wireless communication network to be conserved (e.g. by releasing profiles not needed anymore).

The apparatus may further comprise:
- means for determining that at least a part of at least one retained radio resource configuration profile at least a part of which has been retained by the apparatus in the inactive radio state is to be discarded; and
- means for discarding at least a part of the at least one retained radio resource configuration profile having been determined to be discarded.

In other words, at least one retained radio resource configuration profile at least a part of which has been retained by the apparatus in the inactive radio state may be determined by the apparatus to be discarded (at least in part). Yet put differently, the apparatus may decide, e.g. based on an internal algorithm of the apparatus, to remove at least part of at least one profile having been retained by the apparatus in the inactive radio state (at least in part). The means for discarding at least a part of the at least one retained radio resource configuration profile having been determined to be discarded may for instance be configured for deleting and/or removing the at least a part of the at least one retained radio resource configuration profile.

The at least one retained radio resource configuration profile may be determined to be discarded based on a mobility of the apparatus in the inactive radio state. Correspondingly, the means for determining that the at least a part of at least one retained radio resource configuration profile is to be discarded may be configured for determining that the at least a part of at least one retained radio resource configuration profile is to be discarded based on a mobility of the apparatus in the inactive radio state.

For example, at least one retained radio resource configuration profile may be determined to be discarded by the apparatus based on the apparatus, in the inactive radio state, moving out of a cell in which the apparatus transitioned from a connected radio state to the inactive radio state (e.g., a last serving cell). Alternatively or in addition, a retained radio resource configuration profile may be determined to be discarded by the apparatus based on the apparatus, in the inactive radio state, moving out of a notification area of a radio access network of the wireless communication network, e.g. a Radio Access Network (RAN) based Notification Area (RNA), and/or moving out of an area within which the at least one radio resource configuration profile may for example be handled (e.g., managed). Alternatively or in addition, a retained radio resource configuration profile may be determined to be discarded by the apparatus based on the apparatus, in the inactive radio state, moving from a first cell (e.g., a last serving cell) to a second cell, e.g. within a same notification area of a radio access network of the wireless communication network, or across different notification areas. Retained radio resource configuration profiles determined to be discarded based on the apparatus moving out of the last serving cell, the apparatus moving out of the RNA and/or the apparatus moving from the first cell to the second cell may for instance be (e.g. pairwise) different, at least in part. In other words, based on determining whether the apparatus moved out of the last serving cell, moved out of the RNA and/or moved from the first cell to the second cell (examples of the mobility of the apparatus in the inactive radio state), respectively different retained radio resource configuration profiles (e.g. profiles not valid anymore when moving out of the last serving cell, when moving out of the RNA and/or when moving from the first cell to the second cell) may be determined to be discarded.

In particular this approach enables a more efficient, less complex and less resource-costly mechanism to retain, by both the apparatus and the wireless communication network, only radio resource configuration profiles (e.g. still) relevant in view of the mobility of the user equipment in the inactive radio state.

The apparatus may further comprise:
- means for indicating, to a network node, at least one retained radio resource configuration profile at least a part of which has been retained by the apparatus in the inactive radio state and further during an event associated with a mobility of the apparatus.

As described above, indicating the at least one retained radio resource configuration profile to the network node may for instance comprise or correspond to providing information indicative of the at least one retained radio resource configuration profile, e.g. information identifying a respective one of the at least one retained radio resource configuration profile, to the network node. Alternatively or in addition, indicating the at least one retained radio resource configuration profile to the network node may comprise or correspond to transmitting an indication of the at least one retained radio resource configuration profile to the network node. Said indication may for example comprise or correspond to a list of respective identifiers (e.g., IDs) for identifying a respective one of the at least one retained radio resource configuration profile. Each of the at least one retained radio resource configuration profile may comprise, and/or be identifiable by, a respective identifier. The at least one retained radio resource configuration profile at least a part of which has been retained by the apparatus in the inactive radio state and further during the event associated with a mobility of the apparatus may be a subset of the plural radio resource configuration profiles of the apparatus, of the at least one radio resource configuration profile indicated to be retained and/or, in particular, of at least one radio resource configuration profile having been retained by the apparatus in the inactive radio state.

An event associated with a mobility of the apparatus may for instance comprise or correspond to the apparatus moving out of a cell in which the apparatus transitioned from a connected radio state to the inactive radio state, moving out of a notification area of a radio access network of the wireless communication network, e.g. a Radio Access Network (RAN) based Notification Area (RNA), moving out of an area within which the at least one radio resource configuration profile may for example be handled (e.g., managed) and/or moving from a first cell (e.g., a last serving cell) to a second cell, e.g. within a same notification area of a radio access network of the wireless communication network, or across different notification areas.

By indicating retained radio resource configuration profiles at least a part of which has been retained by the apparatus in the inactive radio state and further during an event associated with a mobility of the apparatus, the wireless communication network may use this information in an advantageous manner, e.g. for performing one or more actions (e.g. retaining the radio resource configuration profile(s) retained by the apparatus) and/or for indicating to the apparatus to perform one or more actions (e.g. continuing to retain the retained radio resource configuration profile(s) or releasing the retained radio resource configuration profile(s)), thereby allowing for a signaling overhead, a consumed time, and/or a delay when exchanging data between the apparatus and the wireless communication network to be advantageously reduced (e.g. by (re-)using the retained radio resource configuration profile) and/or for storage resources of the apparatus and/or of the wireless communication network to be conserved (e.g. by releasing profiles not needed anymore).

Indicating, by the apparatus according to the second example aspect, the at least one radio resource configuration profile to the user equipment may for instance comprise or correspond to providing information indicative of the at least one radio resource configuration profile to the user equipment. Alternatively or in addition, indicating the at least one radio resource configuration profile to the user equipment may comprise or correspond to transmitting an indication of the at least one radio resource configuration profile to the user equipment. Said indication may for instance comprise or correspond to a list of respective identifiers (e.g., IDs) for identifying a respective one of the at least one radio resource configuration profile. Thus, the at least one radio resource configuration profile may in particular be a subset of plural radio resource configuration profiles of the user equipment (e.g., stored on the user equipment).

As mentioned, at least a part of at least one further radio resource configuration profile may have to be discarded by the user equipment. Correspondingly, the apparatus according to the second example aspect may further comprise:
- means for indicating, to the user equipment, that at least a part of the at least one further radio resource configuration profile is to be discarded by the user equipment.

The apparatus according to the second example aspect may (e.g. likewise) comprise means for retaining at least a part of the at least one radio resource configuration profile in the inactive radio state of the apparatus and/or means for discarding at least a part of the at least one further radio resource configuration profile.

The at least one further radio resource configuration profile (e.g. each of the at least one further radio resource configuration profile) may in particular be different from (e.g. each of) the at least one radio resource configuration profile indicated to be retained to the user equipment. In other words, the at least one further radio resource configuration profile to be discarded by the user equipment may not be indicated to be retained to the user equipment by the apparatus according to the second example aspect.

The apparatus according to the second example aspect may further comprise:
- means for determining the at least one radio resource configuration profile at least a part of which is to be retained by the user equipment in the inactive radio state.

As mentioned, the at least one radio resource configuration profile may be selected among the plural radio resource configuration profiles of the user equipment by the apparatus according to the second example aspect. Correspondingly, determining the at least one radio resource configuration profile may for instance comprise selecting the at least one radio resource configuration profile from among plural radio resource configuration profiles of the user equipment, e.g. stored on the user equipment.

The means for determining the at least one radio resource configuration profile at least a part of which is to be retained by the user equipment in the inactive radio state (said means being comprised by the apparatus according to the second example aspect) may be configured for determining the at least one radio resource configuration profile based on a mobility of the user equipment in the inactive radio state. Alternatively or in addition, the means for determining the at least one radio resource configuration profile which are comprised by the apparatus according to the first example aspect may be configured for determining the at least one radio resource configuration profile based on a mobility of the apparatus according to the first example aspect in the inactive radio state. In other words, the at least one radio resource configuration profile at least a part of which is to be retained may for instance be determined based on the mobility of the apparatus according to the first example aspect (e.g., a user equipment) in the inactive radio state.

For example, at least one radio resource configuration profile may be determined (to be retained at least in part) based on the user equipment remaining (e.g. camping), in the inactive radio state, in a cell in which the user equipment transitioned from a connected radio state to the inactive radio state (e.g., a last serving cell). Alternatively or in addition, at least one radio resource configuration profile may be determined (to be retained at least in part) based on the user equipment remaining, in the inactive radio state, in a notification area of a radio access network of the wireless communication network, e.g. a Radio Access Network (RAN) based Notification Area (RNA), and/or in an area within which the at least one radio resource configuration profile may for example be handled (e.g., managed). Alternatively or in addition, at least one radio resource configuration profile may be determined (to be retained at least in part) based on the user equipment moving, in the inactive radio state, from a first cell (e.g., a last serving cell) to a second cell, e.g. within a same notification area of a radio access network of the wireless communication network, or across different notification areas. The radio resource configuration profile(s) determined based on the user equipment moving from the first cell to the second cell, the user equipment remaining in the RNA and/or the user equipment remaining in the last serving cell may for instance be (e.g. pairwise) different, at least in part. In other words, based on determining whether the user equipment remained in a last serving cell, remained (e.g. only) in an RNA and/or moved in between two cells (examples of the mobility of the user equipment in the inactive radio state), at least in part different radio resource configuration profiles may be determined to be retained by the user equipment.

In particular this approach enables a more efficient, less complex and less resource-costly mechanism to retain (e.g. for a respective retention duration), by both the user equipment and the wireless communication network, only radio resource configuration profiles relevant in view of the mobility of the user equipment in the inactive radio state.

The apparatus according to the second example aspect may further comprise:
- means for receiving, from a network node having been connected to the user equipment, an indication of at least one past radio resource configuration profile, wherein the at least one past radio resource configuration profile has been determined by the network node as still being valid for the user equipment,
- wherein the means for determining the at least one radio resource configuration profile at least a part of which is to be retained by the user equipment in the inactive radio state are configured for determining the at least one radio resource configuration profile based at least in part on the at least one past radio resource configuration profile.

The network node having been connected to the user equipment may for instance comprise or correspond to a network node associated with a cell in which the user equipment transitioned from a connected radio state to the inactive radio state (e.g., a last serving cell of the user equipment).

The indication of the at least one past radio resource configuration profile may for instance comprise or correspond to information indicative of the at least one past radio resource configuration profile, e.g. information identifying a respective one of the at least one past radio resource configuration profile. For example, said indication may comprise or correspond to a list of respective identifiers (e.g., IDs) for identifying a respective one of the at least one past radio resource configuration profile. Each of the at least one past radio resource configuration profile may comprise, and/or be identifiable by, a respective identifier. The at least one past radio resource configuration profile may for instance comprise *n*ₚₐₛₜ radio resource configuration profiles.

As mentioned, the at least one past radio resource configuration profile may have been determined by the network node as still being valid for the user equipment. A radio resource configuration profile having been determined as still being valid for the user equipment may for instance comprise or correspond to a radio resource configuration profile, a retention duration of which is determined as not being expired (e.g. yet). In other words, a respective retention duration (e.g. a time of validity) of a resource configuration profile having been determined as still being valid may have been determined as not (e.g. yet) having expired.

Determining the at least one radio resource configuration profile at least a part of which is to be retained by the user equipment in the inactive radio state based at least in part on the at least one past radio resource configuration profile may for instance comprise selecting one or more of the radio resource configuration profile(s) from among the past radio resource configuration profile(s).

In particular in this way, only radio resource configuration profiles still being valid may be retained (e.g. for a respective retention duration), by both the user equipment and the wireless communication network, thereby advantageously conserving resources at the user equipment and the wireless communication network.

The apparatus according to the second example aspect may further comprise:
- means for determining at least one retention duration, wherein a respective one of the at least one radio resource configuration profile is to be retained for a respective one of the at least one retention duration;
- means for indicating the at least one retention duration to the user equipment.

The at least one retention duration may for instance be determined based on a mobility of the user equipment in the inactive radio state and/or based on a size of a respective one of at least one radio resource configuration profile. For example, smaller radio resource configuration profiles (e.g. more basic radio resource configuration profiles) may be retained relatively long and/or larger radio resource configuration profiles (e.g. more specific radio resource configuration profiles) may be retained relatively briefly.

Indicating the at least one retention duration may for instance comprise or correspond to providing information indicative of the at least one retention duration, e.g. information quantifying a respective one of the at least one retention duration. Alternatively or in addition, indicating the at least one retention duration may comprise or correspond to transmitting an indication of the at least one retention duration. Said indication may for example comprise or correspond to a list of respective durations (e.g. provided in units of time such as seconds or minutes) for quantifying a respective one of the at least one retention duration. Each of the at least one retention duration may comprise, and/or be quantifiable by, a respective duration.

In particular in this way, advantageous retention duration(s) may be determined and/or indicated, e.g., allowing for releasing radio resource configuration profiles respective retention durations of which have expired, thereby conserving resources at the user equipment and the wireless communication network.

The apparatus according to the second example aspect may further comprise:
- means for receiving, from the user equipment, an indication of at least one retained radio resource configuration profile at least a part of which has been retained by the user equipment in the inactive radio state;
- means for indicating the at least one retained radio resource configuration profile to a network node.

In other words, one or more radio resource configuration profile(s) having been retained at least in part by the user equipment in the inactive radio state, may be indicated by the apparatus according to the second example aspect (e.g., a network node) to an (e.g. further) network node. Yet put differently, the apparatus according to the second example aspect may forward one or more radio resource configuration profile(s) having been retained at least in part by the user equipment to a further network node, e.g. to a network node associated with a cell in which the user equipment transitioned from a connected radio state to the inactive radio state (e.g., a last serving cell of the user equipment).

This in particular allows the further network node to use the forwarded one or more radio resource configuration profile(s) having been retained at least in part by the user equipment in the inactive radio state in an advantageous manner, as further described below.

In particular, as mentioned above, the apparatus according to the third example aspect may comprise means for receiving, from a network node (e.g. the apparatus according to the second example aspect), an indication of at least one retained radio resource configuration profile at least a part of which has been retained by a user equipment in an inactive radio state of the user equipment. Thereby, said indication may in particular correspond to the indication provided by the apparatus according to the second example aspect.

As further mentioned above, the apparatus according to the third example aspect may comprise means for determining, based on the at least one retained radio resource configuration profile and at least one radio resource configuration profile stored by the apparatus, at least one still valid radio resource configuration profile and means for indicating the at least one still valid radio resource configuration profile to the network node. The at least one radio resource configuration profile stored by the apparatus according to the third example aspect may for instance be stored by the apparatus in association with the user equipment.

In particular in this way, the apparatus according to the third example aspect may indicate to a network node now being connected to the user equipment the radio resource configuration profiles that are still valid (e.g. which are still stored by the user equipment) which may then be used by the network node in an advantageous manner, e.g. by determining the at least one radio resource configuration profile indicated to the user equipment to be retained, as further described herein, thus allowing for conserving resources (e.g., storage, radio and/or power resources), e.g. by discarding profiles which are not valid anymore, as described herein.

As used herein, performing a second step based on a first step may for example mean that the second step may be performed, e.g. directly, in response to the first step, e.g. without any intermediate steps in between the first step and the second step. Alternatively, performing a second step based on a first step may mean that the second step may be performed (merely) after the first step, e.g. such that there may be at least one intermediate step in between the first step and the second step.

It is to be understood that the presentation of the embodiments disclosed herein is merely by way of examples and non-limiting.

Herein, the disclosure of a method step shall also be considered as a disclosure of means for performing the respective method step. Likewise, the disclosure of means for performing a method step shall also be considered as a disclosure of the method step itself.

In some embodiments, the apparatus of the first example aspect may comprise at least one processor; and at least one memory storing instructions that, when executed by the at least one processor, cause the apparatus at least to:
- determine at least one radio resource configuration profile at least a part of which is to be retained by the apparatus in an inactive radio state of the apparatus;
- retain at least a part of the at least one radio resource configuration profile in the inactive radio state of the apparatus; and
- discard at least a part of at least one further radio resource configuration profile.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

Some example embodiments will now be described with reference to the accompanying drawings in which
- FIG. 1: exemplarily illustrates a user equipment and two network nodes in wireless communication;
- FIG. 2A: shows an example embodiment of a method according to the present disclosure;
- FIG. 2B: shows a further example embodiment of a method according to the present disclosure;
- FIG. 3: shows a further example embodiment of a method according to the present disclosure;
- FIG. 4: shows a further example embodiment of a method according to the present disclosure;
- FIG. 5: shows an example of a signaling flow chart according to example embodiments of the present disclosure;
- FIG. 6: shows a further example of a signaling flow chart according to example embodiments of the present disclosure;
- FIGS. 7A, 7B: show a further example of a signaling flow chart according to example embodiments of the present disclosure;
- FIG. 8: shows a block diagram of an example of an apparatus according to the first aspect;
- FIG. 9: shows a block diagram of an example of an apparatus according to the second aspect and according to the third aspect;
- FIG. 10: shows a schematic illustration of examples of tangible and non-transitory computer-readable storage media.

### DETAILED DESCRIPTION OF THE FIGURES

The following description serves to deepen the understanding of the present disclosure and shall be understood to complement and be read together with the description of example embodiments of the present disclosure as provided in the above SUMMARY section of this specification.

In the following, an example wireless communication system, within which the present disclosure may be applied, is described. While the radio system in the examples below is a 5G/NR system, this is only to be considered a non-limiting example.

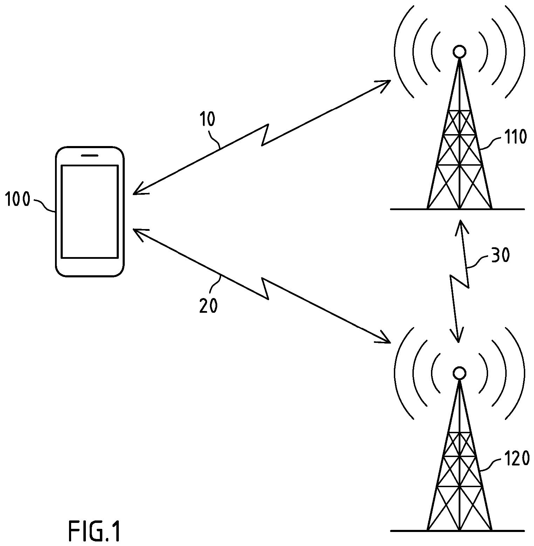

FIG. 1 exemplarily illustrates a UE 100 (an example of the apparatus according to the first aspect) in wireless communication with gNBs 110, 120 (respective examples of the apparatuses according to the second aspect and according to the third aspect) via radio links 10, 20, respectively. gNBs 110, 120 are in wireless communication via a radio link 30. Radio links 10, 20, 30 may enable transmitting/receiving information and/or signals in between UE 100 and gNBs 110, 120, respectively.

For example, UE 100 may receive, from gNB 110 (an example of a network node), an indication of at least one radio resource configuration profile at least a part of which is to be retained by UE 100 in an inactive radio state of UE 100. Alternatively or in addition, UE 100 may (e.g. itself) determine the at least one radio resource configuration profile at least a part of which is to be retained by UE 100 in the inactive radio state. Further, UE 100 may retain at least a part of the at least one radio resource configuration profile in the inactive radio state of UE 100. Further, UE 100 may discard at least a part of at least one further radio resource configuration profile. Further, gNB 110 may indicate, to UE 100, at least one radio resource configuration profile at least a part of which is to be retained by UE 100 in the inactive radio state, wherein at least a part of at least one further radio resource configuration profile is to be discarded by UE 100.

In particular by retaining some radio resource configuration profiles and/or by discarding some other radio resource configuration profiles, various resources (e.g., storage, radio and/or power resources) may be conserved at UE 100 and/or at gNB 110 while reducing signaling overhead, consumed time, and/or delays when exchanging data between UE 100 and gNB 110, thus enabling an improved handling of radio resource configuration profiles.

Further, gNB 120 may receive, from gNB 110, an indication of at least one retained radio resource configuration profile at least a part of which has been retained by UE 100 in the inactive radio state. Further, gNB 120 may determine, based on the at least one retained radio resource configuration profile and at least one radio resource configuration profile stored by gNB 120, at least one still valid radio resource configuration profile. Further, gNB 120 may indicate the at least one still valid radio resource configuration profile to gNB 110.

In particular in this way, gNB 120 (e.g. having previously been connected to UE 100) may advantageously indicate to gNB 110 (e.g. now being connected to UE 100) which profiles are still stored by UE 100, thereby allowing for conserving resources (e.g., storage, radio and/or power resources) at gNB 110, e.g. by discarding at gNB 110 profiles which are not valid anymore, thus enabling an improved handling of radio resource configuration profiles.

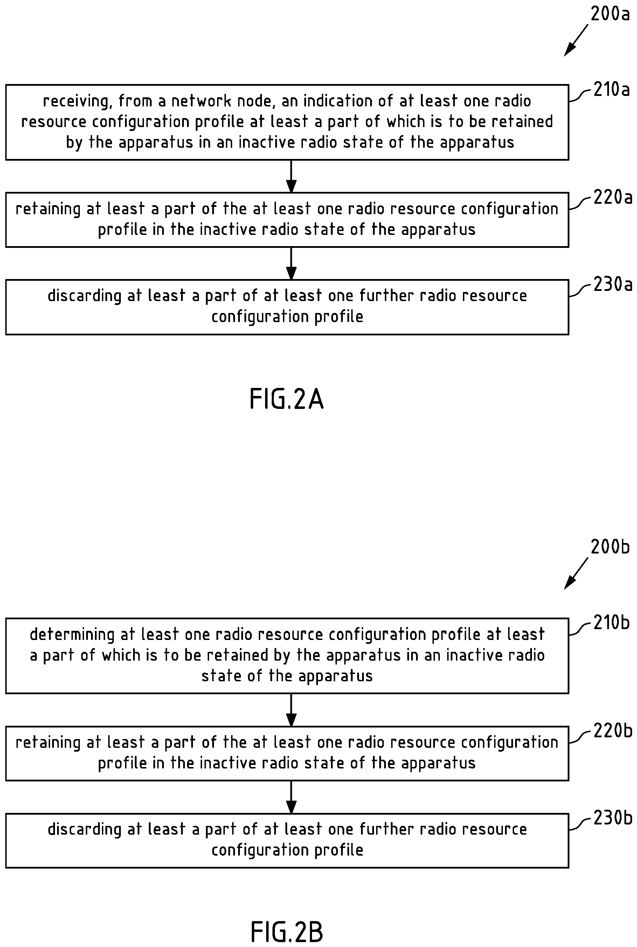

FIG. 2A shows an example embodiment 200a of a method according to the first aspect. Method 200a may for example be performed by an apparatus according to the first aspect (e.g., a UE). First, an indication of at least one radio resource configuration profile at least a part of which is to be retained by the apparatus performing method 200a in an inactive radio state of the apparatus performing method 200a may be received from a network node (action 210a). Further, at least a part of the at least one radio resource configuration profile may be retained in the inactive radio state of the apparatus performing method 200a (action 220a). Further, at least a part of at least one further radio resource configuration profile may be discarded (action 230a).

Example implementations of method 200a will be described in detail further below.

FIG. 2B shows a further example embodiment 200b of a method according to the first aspect. Method 200b may for example be performed by an apparatus according to the first aspect (e.g., a UE). First, at least one radio resource configuration profile at least a part of which is to be retained by the apparatus performing method 200b in an inactive radio state of the apparatus performing method 200b is determined (action 210b). Further, at least a part of the at least one radio resource configuration profile may be retained in the inactive radio state of the apparatus performing method 200b (action 220b). Further, at least a part of at least one further radio resource configuration profile may be discarded (action 230b).

Example implementations of method 200b will be described in detail further below.

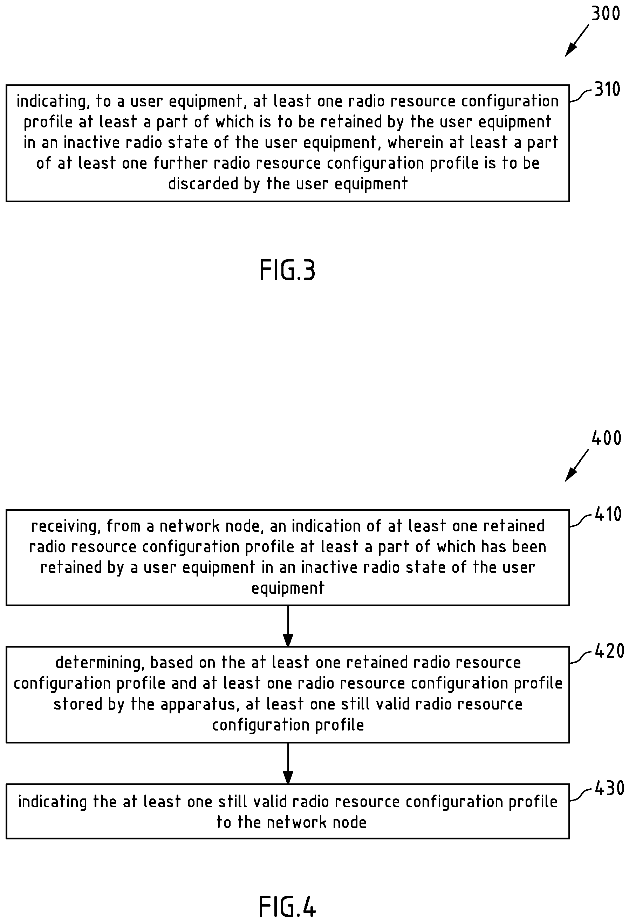

FIG. 3 shows an example embodiment 300 of a method according to the second aspect. Method 300 may for example be performed by an apparatus according to the second aspect (e.g., a network node). At least one radio resource configuration profile at least a part of which is to be retained by a user equipment in an inactive radio state of the user equipment may be indicated to the user equipment, wherein at least a part of at least one further radio resource configuration profile is to be discarded by the user equipment (action 310).

Example implementations of method 300 will be described in detail further below.

FIG. 4 shows an example embodiment 400 of a method according to the third aspect. Method 400 may for example be performed by an apparatus according to the third aspect (e.g., a network node). First, an indication of at least one retained radio resource configuration profile at least a part of which has been retained by a user equipment in an inactive radio state of the user equipment may be received from a network node (action 410). Further, based on the at least one retained radio resource configuration profile and at least one radio resource configuration profile stored by the apparatus performing method 400, at least one still valid radio resource configuration profile may be determined (action 420). Further, the at least one still valid radio resource configuration profile may be indicated to the network node (action 430).

Example implementations of method 400 will be described in detail further below.

Cellular mobile telecommunication systems (examples of wireless communication networks) are built on top of protocols that control how the data is transmitted between UEs and networks. These protocols can be divided into user plane (UP) and control plane (CP) sections, wherein the user plane may be dedicated to the actual task of transmitting user data between a user and the network, and wherein the control plane may be dedicated to ensuring that the user plane remains operational. In other words, the CP may be used for establishing the UP, and it may be considered a task of the CP to ensure uninterrupted functioning of the UP.

An important protocol used for the CP in UMTS/LTE/NR is the Radio Resource Control (RRC), whose specifications can be found in TS 25.331 (UMTS), TS 36.331 (LTE) and TS 38.331 (NR). The RRC specifications define the mechanisms for setting up the connection, establishing the other (UP) protocol layers and reconfiguring their parameters, as well as various procedures intended to keep both UP and CP operations.

It may be considered an objective of 3GPP discussions to identify shortcomings of the 5G protocol design and to recognize areas of improvements that may lead to the foundation of design for 6G. The concept of RRC profiles may be understood to have been introduced to build up and maintain RRC configurations in a layered, scalable and robust manner. RRC profiles may be considered natively versatile, and each profile may be negotiated between a UE and the network to ensure that both UE capabilities and network feature support may be considered when defining one or more suitable RRC profile(s) for a UE in a given situation.

Progressing from 5G, UE states in 6G may include IDLE, INACTIVE, and CONNECTED modes serving distinct purposes. The CONNECTED mode may be characterized by significantly higher UE activity, including signaling and measurements, compared to IDLE/INACTIVE mode. Such increased activity may impact an overall operation time of the UE. However, frequent transitions between CONNECTED and IDLE/INACTIVE modes may introduce several drawbacks, such as increased signaling overhead, time consumption, and added delays. While keeping the UE in CONNECTED mode continuously may mitigate at least some of these issues, it may not always be desirable from a network perspective, especially when the UE has no active data exchange for extended periods. This may also lead to a lower energy efficiency at both the UE and the network.

Modular RRC profiles may aid in mitigating at least some of the challenges associated with frequent transitions between UE states as well as changes in the UE operational mode (spanning between low power/data rate and high data rate/low latency), which may be resource-intensive and delay-inducing.

It may be considered one aim of the present disclosure to alleviate or at least partly solve at least one of the aforementioned and/or of the following issues:
- Issue 1: When a connection of the UE is released from a CONNECTED mode to an INACTIVE mode, the NW may not always want to retain all the RRC profiles (e.g. some profiles could be meant as temporary and/or only for CONNECTED mode, or network may want to optimize a network side storage space used for storing the profiles).
- Issue 2: Some profiles may not be valid in all cells, and reserving network resources for all profiles may be (e.g. resource-)costly. It may be desirable to have a mechanism for the network to conserve its resources but in a way that the profiles stored at the UE align with the profiles stored at the NW.

The present disclosure may be understood to propose, among others, that the network may indicate specific profiles and/or expiration time(s) (e.g. validity time(s)) for profiles (e.g. to be) stored in INACTIVE mode and/or UE actions upon expiration of one or more profiles (e.g. indication to network, reselection to a different frequency and/or modifying reselection priorities). This may allow the UE and the network to maintain a same understanding of stored profiles while allowing in particular the network to conserve its resources in the long-term.

In more detail, the present disclosure may be understood to propose, among others, one or more of the following features:
1) The network may initiate a transition of a UE from the CONNECTED mode to the INACTIVE mode by sending an RRC message (e.g. RRCRelease) to the UE including the stored configuration (e.g. "suspendConfig"), which may instruct the UE to move to the INACTIVE mode while preserving its context for quick resumption (an example of an indication to transition to the inactive radio state);
2) The suspendConfig IE (an example of suspension configuration information) may include parameters for paging and the indicators to retrieve UE context information upon reconnection. Additionally, the NW may indicate how long each profile shall be stored by the UE (an example of the indication of the at least one retention duration), i.e. a validity time for each profile (e.g. some profiles could be released faster than others or apply only to a specific set of cells or frequencies) and whether there are some additional UE actions upon release of the profile (e.g. sending an indication to network using specific resources or triggering UE to either reselect to a carrier with stored profiles or simply modify the reselection priorities so that UE will eventually move to the carrier) (examples of the at least one action performed in response to one or more retention durations having expired);
3) The retention of the profiles or profile components may be related to INACTIVE mobility (an example of determining the at least one radio resource configuration profile based on a mobility of the apparatus in the inactive radio state) i.e., some of the profiles/profile components may be retained only when camping on the last serving cell (cell where UE moves to INACTIVE) and another set of profiles/profile components to be kept within the RNA (examples of a mobility of the apparatus in the inactive radio state);
4) The UE may be informed on which RRC profiles to be kept when it transfers to the INACTIVE mode (an example of the indication of at least one radio resource configuration profile at least a part of which is to be retained by the apparatus in an inactive radio state of the apparatus) and/or an expiration timer for each stored RRC profile (an example of the indication of the at least one retention duration);
5) The network could also indicate RNA update frequency to ensure UE configuration stays aligned with NW assumptions. The UE could indicate upon cell changes the details of RRC profiles it has stored at the time to allow the NW to change that (an example of indicating, to the network node, at least one retained radio resource configuration profile); or
6) The release of profiles (an example of discarding at least a part of at least one radio resource configuration profile) could result in UE performing other actions, such as cell reselection evaluation: this could be based on current reselection priorities based on stored profiles, or changing the reselection priority of the current frequency layer so that a reselection is prioritized towards layers with more stored profiles.

Alternatively or in addition to the aforementioned features, the present disclosure may be understood to propose, among others, one or more of the following features referring in particular to UE behavior:
- Upon receiving the "suspendConfig" which may be sent to the UE along with an RRC message that may be used to transfer the UE connection from CONNECTED mode to INACTIVE mode (e.g. RRCRelease), the UE could compare the RRC profile IDs currently stored at the UE and the RRC profile IDs indicated in the received RRC release message. The UE may release the stored RRC configurations related to the profiles not mentioned in the message (an example of discarding at least one further radio resource configuration profile, e.g. not indicated to be retained). Alternatively or in addition, the UE could decide based on the implementation to still keep some of the profiles (an example of determining, by the UE, at least one radio resource configuration profile at least a part of which is to be retained by the apparatus in an inactive radio state of the apparatus) which could be beneficial for the UE e.g. due to its specific capabilities or the previous patterns of profile usage (an example of determining, by the UE, a respective radio resource configuration profile based on a pattern of usage of the radio resource configuration profile, based on an applicability of the radio resource configuration profile and/or based on a characteristic of the apparatus).
- The UE may keep the RRC profiles mentioned to be stored at the device. The UE may keep storing the profiles even beyond the actual expiration time (an example of the UE determining the at least one retention duration). If the indicated expiration timer is the same for all the profiles the UE could decide to keep certain profiles for a longer duration based on the previous usage pattern or based on applicability of the profile for future usage as determined by UE based algorithm (an example of determining, by the UE, a respective retention duration based on a pattern of usage of a radio resource configuration profile associated with the respective retention duration, based on an applicability of the radio resource configuration profile associated with the respective retention duration and/or based on a characteristic of the apparatus).
- In situations where the UE decides to keep the profiles for a longer duration contradictory to the NW indication the UE may indicate this to the NW at the next instance of information exchange.
- The UE may comprise inbuilt timers for monitoring specific expiration time(s). The UE may be configured in a manner in which it is capable to start and monitor multiple timers simultaneously and/or take actions based on the expiration of each of the timers. The UE may decide on the storage of RRC profiles based on an availability of timers (an example of determining the at least one radio resource configuration profile based on a number of means for monitoring the at least one retention duration). If only a limited number of timers are available, the UE may decide to keep the most useful profiles indefinitely and/or may allocate the timers (only) to the rest of the profiles based on a deemed usability (an example of determining the at least one retention duration based on a number of means for monitoring the at least one retention duration).

For purposes of illustration, this may be illustratively exemplified as follows:

### RRC Profiles stored at the UE

Profile ID 1 -> Start expiration timer t1
Profile ID 2 <- Profile Configuration released
Profile ID 3 <- Profile Configuration released
Profile ID 4 -> Start expiration timer t4
Profile ID n -> Start expiration timer tn

- Once it transfers to the INACTIVE mode the UE may start the expiration timers for each of the stored profiles and may keep monitoring the timers.
- Upon the expiry of a timer the UE may release the RRC configuration related to the concerned RRC profile (an example of discarding a radio resource configuration profile, a retention duration of which has expired).
- The UE could decide to reselect to a different frequency (an example of determining a reselected frequency) or modifying reselection priorities (an example of determining at least one modified reselection priority) after the expiration of a particular profile (an example of a retention duration having expired) based on internal algorithms.
- For example, the UE could reevaluate the list of profiles that shall be removed when moving to other cell(s) in the RNA based on the prior usage (an example of determining a radio resource configuration profile by the UE based on a pattern of a previous usage of the radio resource configuration profile).
- Similarly, if the UE moves to a different RNA (an example of moving across different notification areas), it could reevaluate the stored profiles based on the above and may release the stored configuration for profiles which are not required to be kept.

Thus, alternatively or in addition to the UE following the NW indication, the UE may be empowered to perform the derivation based on raw UE capabilities for the concerned criteria. For instance, the UE raw capability may be used to determine or know (based on implementation characteristics) the most important profiles to keep in order to maximize for example its achievable throughput, energy efficiency and/or latency considering the importance of each attribute for its specific usage. In this scenario the derivation process may be the outcome of internal UE algorithm considering the UEs own characteristics.

The present disclosure may be understood to propose, among others, the NW to inform the UE on which RRC profiles to be kept when it transfers to the INACTIVE mode through a network-provided configuration (which may be called "suspendConfig"), which may be sent to the UE along with an RRC message that may be used to transfer the UE connection from CONNECTED mode to INACTIVE mode (e.g. RRCRelease). This may enable the UE to keep only the RRC Profiles which may (e.g. will) also be stored at the NW. This may help reduce the unnecessary storage of redundant information at the UE as well as in the network which may not be reusable at the time of reconnecting to the NW.

Alternatively or in addition, it may be considered one intention for the NW and the UE to act in a synchronized manner by also provisioning an expiration timer for each RRC profile which may be designated to be kept at the UE side. This may help the NW and the UE to remove an RRC profile which could be not necessary or could be outdated due to the extended time duration UE has stayed in the INACTIVE mode. The communication of the expiration timers along with the profile list in the suspendConfig IE may help the UE to release such profiles at the same time as the NW while it stays in the INACTIVE mode. This could help the UE to keep only the basic RRC profile(s) which could be valid for a longer duration when the time at the INACTIVE state is longer.

Furthermore, the UE may be informed about profiles that shall be kept when camping in the last serving cell i.e., the cell that released to UE to INACTIVE. The cell based indication may have options like:
- List of profiles or profile components that UE shall retain when camping in the last serving cell
- List of profiles that shall be removed when moving to other cell(s) in the RNA
   ∘ The list may apply to whole RNA or
   ∘ The list may be per cell within the RNA

Retention or removal of profiles in the RNA may be negotiated between gNBs and may be based on gNB capabilities (e.g. number of supported carriers, MIMO configurations, TX power, etc.) or radio conditions, cell load or the like.

This may enable an efficient, simpler and less costly mechanism to retain fewer profiles (for both UE and NW) only until the expected validity time of RRC configuration encapsulated in the profile.

One or more aspects and/or features disclosed in the present disclosure may allow for one or more of the following:
- Informing a UE on which RRC profiles to be kept stored when it transfers to the INACTIVE mode and the expiration timer for each stored RRC profile. This may help reduce the unnecessary storage of redundant information at the UE which could not be reused at the time of reconnecting to the UE.
- Facilitating the NW and the UE to act in a synchronized manner by provisioning an expiration timer for each RRC profile which may be designated to be kept at the UE side enabling the UE to release obsolete profiles at the same time as the NW while it stays in the INACTIVE mode. This may help the UE to keep only the basic RRC profile/s which could be valid for a longer duration when the time at the INACTIVE state is longer.
- Informing the stored RRC profile(s) to the network during an RNA update may allow the NW to re-evaluate the validity of the RRC profile(s) stored at the UE if necessary and inform the UE with any modifications to the list of RRC profile(s) to be kept stored at the UE and the respective expiration timers.

In the following, example implementations of methods 200a, 200b, 300, and/or 400 are described in detail. Said example implementations in particular relate to actions of signaling flow charts 500, 600, 700.

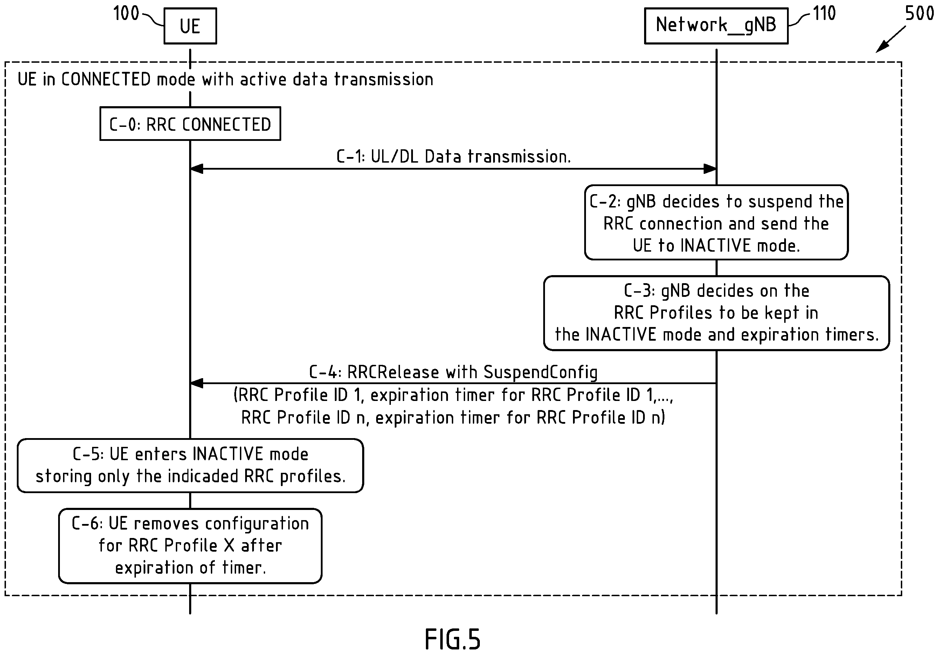

FIG. 5 shows an example of a signaling flow chart according to example embodiments of the described aspects. In particular, the signaling diagram in FIG. 5 shows an example of a message sequence (or signaling) for a gNB 110 informing relevant RRC Profiles to a UE 100. In detail:
Action C-0: UE 100 is in (RRC) CONNECTED mode (e.g. with active data transmission)
Action C-1: UE 100/gNB 110 transmit UL/DL data.
Action C-2: Based on UE 100/gNB 110 activity, gNB 110 decides to suspend the RRC connection of UE 100 and to transfer UE 100 to the INACTIVE mode.
Action C-3: gNB 110 decides on the RRC profiles to be kept at UE 100 (an example of the apparatus according to the second example aspect determining the at least one radio resource configuration profile) after UE 100 is transferred to the INACTIVE mode, e.g. out of the RRC profiles currently stored at UE 100 (an example of selecting the at least one radio resource configuration profile among plural radio resource configuration profiles of the apparatus) and the NW, and the expiration timers for each of these profiles (an example of the apparatus according to the second example aspect determining the at least one retention duration) based on their expected time of validity (an example of determining a retention duration based on an (e.g. expected) time of validity of a respective radio resource configuration profile).
Action C-4: gNB 110 sends an RRCRelease message (an example of a radio resource control message) to UE 100 along with a SuspendConfig (an example of transmitting suspension configuration information in conjunction with a radio resource control message). The SuspendConfig would include the IDs of the RRC profile(s) to be kept stored at UE 100 and their respective expiration timers (an example of the indication of the at least one radio resource configuration profile and the indication of the at least one retention duration being comprised by the suspension configuration information).
Action C-5: UE 100 enters the INACTIVE mode (an example of the apparatus transitioning to the inactive radio state, e.g. from a connected radio state). It will keep only the indicated RRC profiles in storage (an example of only retaining, at least a part of, at least one radio resource configuration profile(s) indicated to be retained) and would release the rest of the profiles it had in storage (an example of discarding at least a part of at least one further radio resource configuration profile) while it was in the CONNECTED mode. The NW would similarly release rest of the RRC profiles for the concerned UE 100 (an example of the apparatus according to the second aspect discarding the at least one further radio resource configuration profile).
Action C-6: UE 100 would monitor the expiration time for each of the stored RRC profiles as indicated (an example of monitoring the at least one retention duration) and if the expiration time is reached (an example of a respective retention duration having expired) UE 100 would release the configuration details related to that RRC profile (an example of discarding a radio resource configuration profile, wherein a retention duration of the radio resource configuration profile has expired). Similarly, the NW would also release the details related to such obsolete RRC profiles of UE 100 from its storage after the expiration time (an example of the apparatus according to the second aspect discarding a radio resource configuration profile, wherein a retention duration of the radio resource configuration profile has expired).

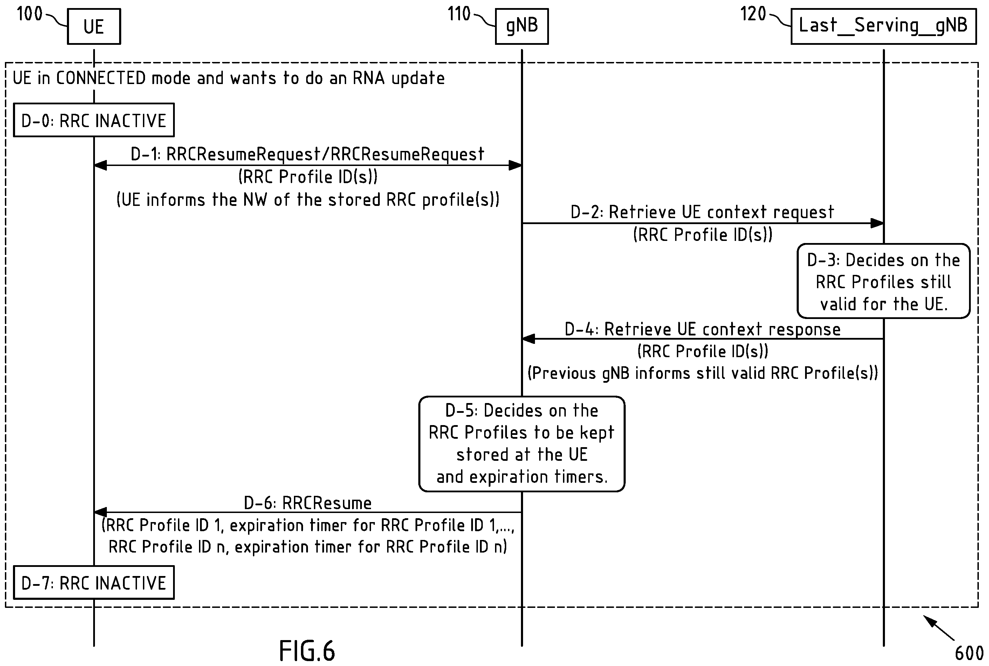

FIG. 6 shows a further example of a signaling flow chart according to example embodiments of the described aspects. In particular, the signaling diagram in FIG. 6 shows an example of a RRC message sequence (or signaling) for a gNB 110 informing (still) valid RRC profiles to a UE 100 at an RNA update. In detail:
Action D-0: UE 100 is in (RRC) INACTIVE mode (an example of an inactive radio state)
Action D-1: RRC resume request from UE 100 for an RNA update which includes the RRC Profile ID(s) of the RRC profile(s) which it has in store at that time (an example of indicating, to a network node, at least one retained radio resource configuration profile).
Action D-2: gNB 110 would send the Retrieve UE context request to the last serving gNB 120 with the RRC Profile ID(s) UE 100 has stored at that time (an example of an apparatus according to the second aspect indicating the at least one retained radio resource configuration profile to a network node and of an apparatus according to the third aspect receiving an indication of at least one retained radio resource configuration profile from a network node).
Action D-3: The last serving gNB 120 would compare the available RRC profiles for UE 100 it has stored with the received information and would decide on the still valid RRC profile(s) considering the change of the serving gNB (an example of an apparatus according to the third aspect determining, based on the at least one retained radio resource configuration profile and at least one radio resource configuration profile stored by the apparatus, at least one still valid radio resource configuration profile).
Action D-4: The last serving gNB 120 sends the Retrieve UE context response to the current gNB 110 informing the still valid RRC profile(s) and their content (an example of an apparatus according to the third aspect indicating the at least one still valid radio resource configuration profile to the network node).
Action D-5: gNB 110 decides on the RRC profile(s) to be kept at UE 100 (an example of the apparatus according to the second example aspect determining the at least one radio resource configuration profile) out of the RRC profiles currently stored at UE 100 (an example of selecting the at least one radio resource configuration profile among plural radio resource configuration profiles of the apparatus) and the NW and the expiration timers for each of these profiles (an example of the apparatus according to the second example aspect determining the at least one retention duration) based on their expected time of validity (an example of determining a retention duration based on an (e.g. expected) time of validity of a respective radio resource configuration profile).
Action D-6: gNB 110 sends the RRC resume message (an example of a radio resource control message) including the IDs of the RRC profiles (an example of information identifying a respective one of the at least one radio resource configuration profile) to be kept stored at UE 100 and the respective expiration timers.
Action D-7: UE 100 re-enters the INACTIVE mode (an example of re-entering the inactive radio state). It will keep only the indicated RRC profile(s) in storage (an example of only retaining, at least a part of, at least one radio resource configuration profile(s) indicated to be retained) and would release the rest of the profiles it had in storage (an example of discarding at least a part of at least one further radio resource configuration profile). The NW would similarly release rest of the RRC profiles for the concerned UE 100 (an example of the apparatus according to the second aspect discarding the at least one further radio resource configuration profile).

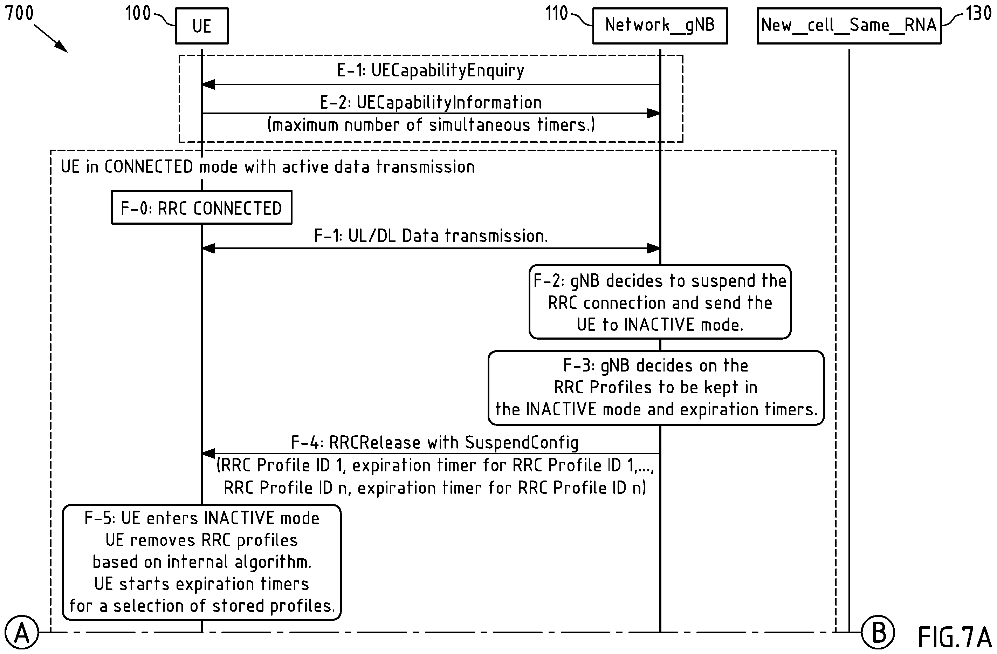

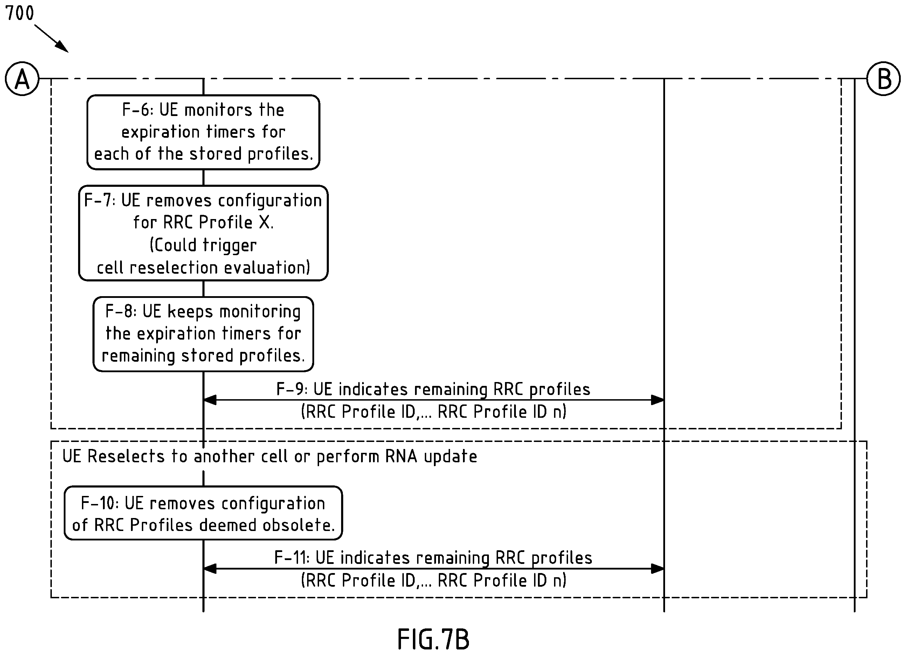

FIGS. 7A, 7B show a further example of a signaling flow chart according to example embodiments of the described aspects. In particular, the signaling diagram in FIGS. 7A, 7B shows an example of a message sequence (or signaling) for exchanging RRC Profiles stored in the INACTIVE mode. In detail:
Action E-1: gNB 110 sends a UECapabilityEnquiry to UE 100.
Action E-2: UE 100 sends UECapabilityInformation, e.g., a maximum number of simultaneous timers (an example of a number of available timers), to gNB 110.
Actions F-0 - F-4: gNB 110 decides to suspend the RRC connection of UE 100 and transfer it to INACTIVE mode. Actions F-0 - F-4 may correspond to actions C-0 - C-4 shown in and described with respect to FIG. 5.
Action F-5: UE 100 enters the INACTIVE mode. UE 100 would remove the RRC profiles based on its own algorithm (an example of an apparatus according to the first aspect (e.g. itself) determining the at least one radio resource configuration profile at least a part of which is to be retained by the apparatus in the inactive radio state of the apparatus). UE 100 would keep only the most beneficial profiles for its usage and would start expiration timers if deemed necessary (an example of an apparatus according to the first aspect (e.g. itself) determining the at least one retention duration). The timers could also be determined based on previous usage patterns or UE 100s own service requirements (an example of determining the at least one retention duration based on a pattern of a previous usage of the radio resource configuration profile, based on an applicability of the radio resource configuration profile and/or based on a characteristic of the apparatus).
Action F-6: UE 100 would monitor the expiration timer for each of the stored RRC profiles (an example of monitoring the at least one retention duration).
Action F-7: In case one of the stored RRC profiles becomes obsolete due to the expiry of the timer UE 100 would remove the RRC configuration associated with that profile (an example of discarding a radio resource configuration profile, wherein a retention duration of the radio resource configuration profile has expired). The removal of the profile could also be due to the decision of a UE 100 internal algorithm while the timer is still running (an example of an apparatus according to the first aspect retaining a radio resource configuration profile for a retention duration that is longer than a corresponding retention duration having been indicated to the apparatus by the network node). Additionally, this could trigger cell reselection evaluation considering the remaining stored profiles (an example of determining at least one reselected frequency and/or determining at least one modified reselection priority).
Action F-8: UE 100 would continue to monitor the expiration timers for the remaining stored profiles (an example of monitoring the at least one retention duration).
Action F-9: UE 100 could inform the NW of the remaining RRC profiles (an example of indicating, to a network node, at least one retained radio resource configuration profile) so that the NW could synchronize internal databases with UE 100 (e.g. by retaining at least a part of at least one radio resource configuration profile and/or by discarding at least a part of at least one further radio resource configuration profile).
Action F-10: If UE 100 reselects to another cell within the same RNA or performs an RNA update (respective examples of an apparatus according to the first aspect moving, in the inactive radio state, from a first cell to a second cell within a same notification area and across different notification areas), this could trigger the removal of stored profiles that UE 100 deems obsolete after reselection from the original cell (an example of discarding a retained radio resource configuration profile based on the apparatus according to the first aspect moving from a first cell to a second cell). UE 100 could also decide to change and/or restart the expiration timers based on the renewed priority of the profiles (an example of an apparatus according to the first aspect determining at least one modified retention duration based on a modified reselection priority).
Action F-11: UE 100 could inform the NW of the remaining RRC profiles (an example of indicating, to a network node, at least one retained radio resource configuration profile at least a part of which has been retained by the apparatus in the inactive radio state and further during an event associated with a mobility of the apparatus (e.g. reselecting to another cell or performing an RNA update)) so that the NW could synchronize internal databases with UE 100 (e.g. by retaining at least a part of at least one radio resource configuration profile and/or by discarding at least a part of at least one further radio resource configuration profile).

Additionally, the release of profiles could result in UE performing other actions, such as cell reselection evaluation: this could be based on current reselection priorities based on stored profiles, or changing the reselection priority of the current frequency layer so that a reselection may be prioritized towards layers with more stored profiles.

The resumption of a suspended RRC connection could be initiated by upper layers when the UE may need to transit from RRC _INACTIVE state to RRC_CONNECTED state or by the RRC layer to perform an RNA update.

The UE could indicate upon cell changes or through explicit indication the details of RRC profiles it has stored at the time. This could allow the NW to re-evaluate the validity of the RRC profile(s) stored at the UE if necessary and inform the UE with any modifications to the list of RRC profile(s) to be kept stored at the UE and the respective expiration timers.

The following is an ASN. 1 (Abstract Syntax Notation One) example in accordance with the present disclosure of including a list of RRC Profiles to be kept stored at a UE during the INACTIVE mode in an RRCRelease message based on 5G RRC configuration of INACTIVE mode:

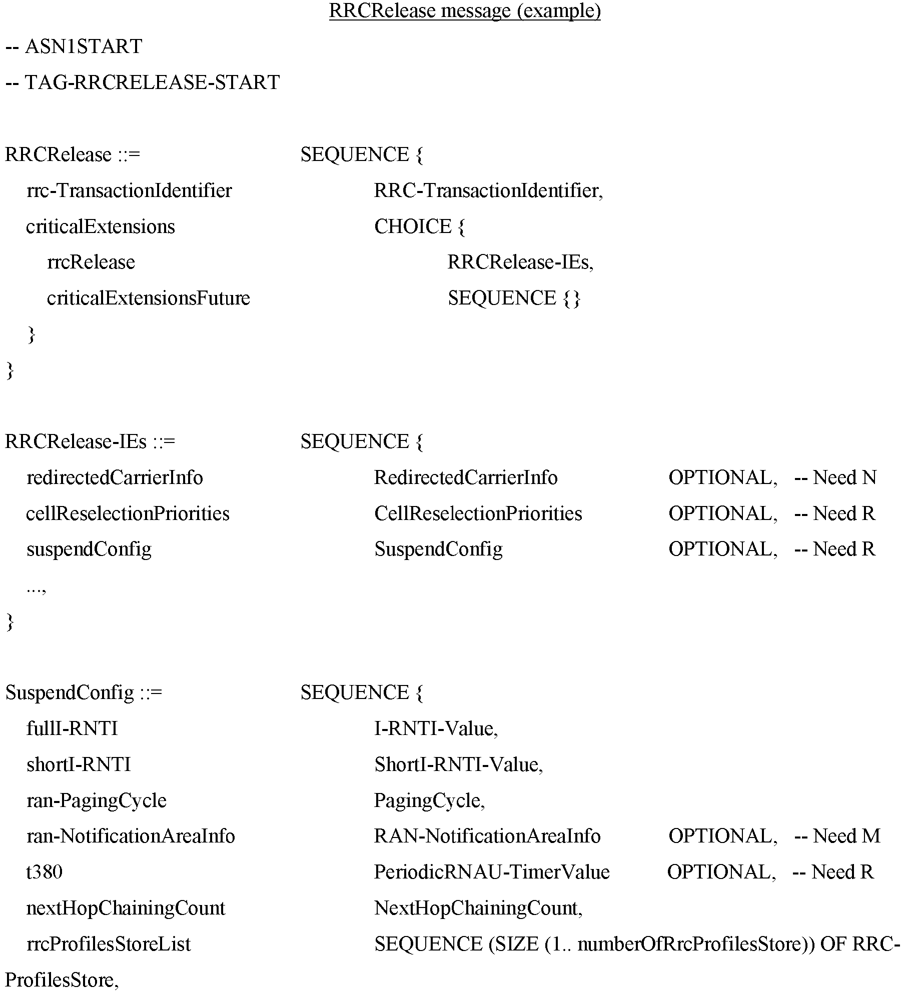

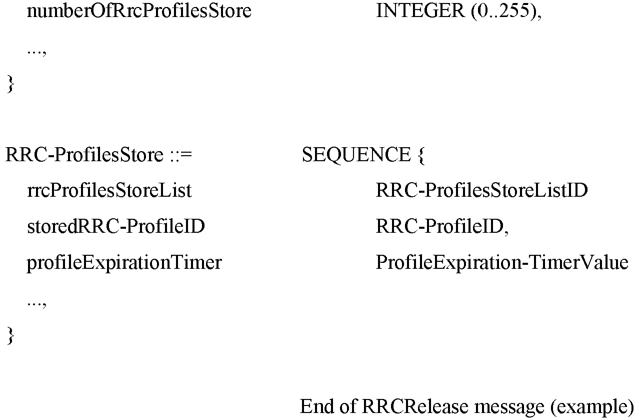

The resumption of a suspended RRC connection could be initiated by upper layers when the UE needs to transit from RRC _INACTIVE state to RRC_CONNECTED state or by the RRC layer to perform an RNA update. Network could also indicate RNA update frequency to ensure UE configuration stays aligned with NW assumptions. The UE could indicate upon cell changes the details of RRC profiles it has stored at the time. This procedure could allow the NW to re-evaluate the validity of the RRC profile(s) stored at the UE if necessary and inform the UE with any modifications to the list of RRC profile(s) to be kept stored at the UE and the respective expiration timers.

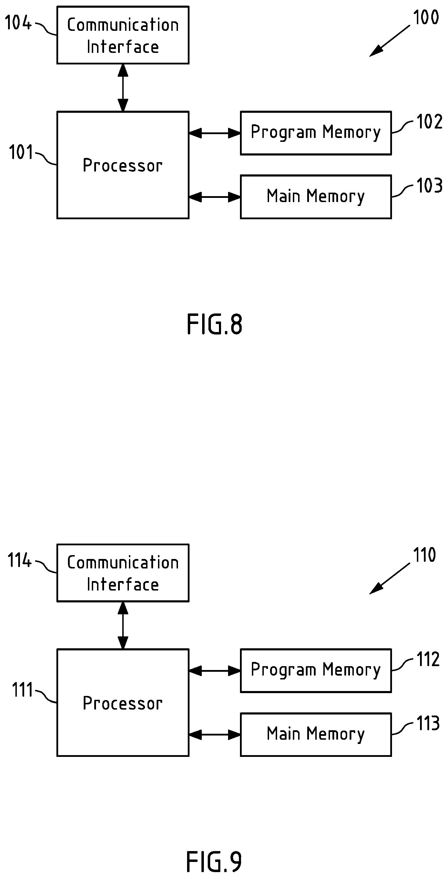

Now turning to FIG. 8, FIG. 8 shows a block diagram of an example of an apparatus 100 according to the first aspect (e.g., a UE). For example, apparatus 100 may be one of a smartphone, a tablet computer, a notebook computer, a smart watch, a smart band, an IoT device or a vehicle or a part thereof.

Apparatus 100 comprises a processor 101. Processor 101 may represent a single processor or two or more processors, which are for instance at least partially coupled, for instance via a bus. Processor 101 executes instructions, e.g. a program code stored in program memory 102 (for instance program code causing apparatus 100 in connection with an apparatus 110, 120 according to the second and/or third aspect to perform one or more of the example embodiments of a method according to the present disclosure or parts thereof, when executed on processor 101), and interfaces with a main memory 103. Program memory 102 may also contain an operating system for processor 101. Some or all of memories 102 and 103 may also be included into processor 101.

One of or both of a main memory and a program memory of a processor (e.g. program memory 102 and main memory 103) could be fixedly connected to the processor (e.g. processor 101) or at least partially removable from the processor, for instance in the form of a memory card or stick.

A program memory (e.g. program memory 102) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 103) may for instance be a volatile memory. It may for instance be a DRAM memory, to give non-limiting example. It may have instructions stored therein to for instance be used as a working memory for processor 101 when executing an operating system, an application, a program, and/or the like.

Processor 101 further controls a communication interface 104 (e.g. radio interface) configured to receive and/or transmit data and/or information. For instance, communication interface 104 may be configured to transmit and/or receive radio signals from a network node, in particular as described herein. It is to be understood that any computer program code based processing required for receiving and/or evaluating radio signals may be stored in an own memory of communication interface 104 and executed by an own processor of communication interface 104 and/or it may be stored for example in memory 103 and executed for example by processor 101.

Communication interface 104 may in particular be configured to communicate according to a cellular communication system like a 2G/3G/4G/5G or future generation cellular communication system, e.g. 6G. Apparatus 100 may use radio interface 104 to communicate with a network node.

For example, the communication interface 104 may further comprise a BLE and/or Bluetooth radio interface including a BLE transmitter, receiver or transceiver. For example, radio interface 104 may additionally or alternatively comprise a WLAN radio interface including at least a WLAN transmitter, receiver or transceiver.

The components 102 to 104 of apparatus 100 may for instance be connected with processor 101 by means of one or more serial and/or parallel buses.

It is to be understood that apparatus 100 may comprise various other components. For example, apparatus 100 may optionally comprise a user interface (e.g. a touch-sensitive display, a keyboard, a touchpad, a display, etc.).

Now turning to FIG. 9, FIG. 9 shows a block diagram of an example of an apparatus 110 according to the second aspect and according to the third aspect (e.g., a network node, for instance a base station or gNB). For instance, apparatus 110 may be configured for scheduling and/or transmitting signals to the apparatus 100, as described above.

Apparatus 110 comprises a processor 111. Processor 111 may represent a single processor or two or more processors, which are for instance at least partially coupled, for instance via a bus. Processor 111 executes a program code stored in program memory 112 (for instance program code causing apparatus 110 to perform alone or together with apparatus 100 and/or apparatus 120 example embodiments according to the present disclosure or parts thereof), and interfaces with a main memory 113.

Program memory 112 may also comprise an operating system for processor 111. Some or all of memories 112 and 113 may also be included into processor 111.

Moreover, processor 111 controls a communication interface 114 which is for example configured to communicate according to a cellular communication system like a 2G/3G/4G/5G or future generation cellular communication system, e.g. 6G. Communication interface 114 of apparatus 110 may be realized by radio heads for instance and may be provided for communication between a network node and a user equipment.

The components 112 to 114 of apparatus 110 may for instance be connected with processor 111 by means of one or more serial and/or parallel busses.

The disclosure of components of apparatus 110 is to be understood as a disclosure of corresponding components of the apparatus 120.

It is further to be understood that apparatuses 100, 110, 120 may comprise various other components.

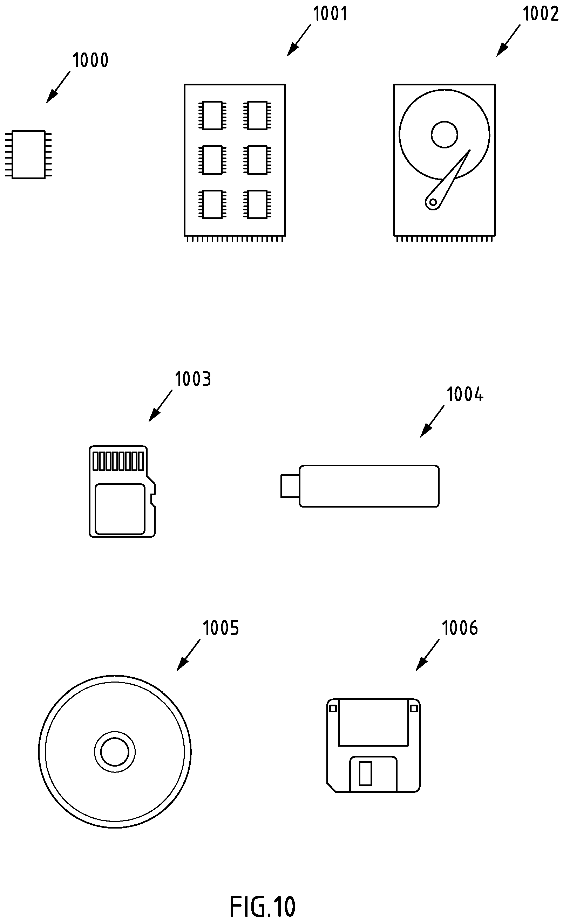

FIG. 10 shows a schematic illustration of examples of tangible and non-transitory computer-readable storage media according to the present disclosure that may for instance be used to implement memory 102 of FIG. 8 or memory 112 of FIG. 9. To this end, FIG. 10 displays a flash memory 1000, which may for instance be soldered or bonded to a printed circuit board, a solid-state drive 1001 comprising a plurality of memory chips (e.g. Flash memory chips), a magnetic hard drive 1002, a Secure Digital (SD) card 1003, a Universal Serial Bus (USB) memory stick 1004, an optical storage medium 1005 (such as for instance a CD-ROM or DVD) and a magnetic storage medium 1006.

Any presented connection in the described embodiments is to be understood in a way that the involved components are operationally coupled. Thus, the connections can be direct or indirect with any number or combination of intervening elements, and there may be merely a functional relationship between the components.

As used in this text, the term 'circuitry' may refer to one or more or all of the following:
(a) hardware-only circuit implementations (such as implementations in only analog and/or digital circuitry) and
(b) combinations of hardware circuits and software (and/or firmware), such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of 'circuitry' applies to all uses of this term in this text, including in any claims. As a further example, as used in this text, the term 'circuitry' also covers an implementation of merely a hardware circuit or processor (or multiple processors) or portion of a hardware circuit or processor and its (or their) accompanying software and/or firmware. The term 'circuitry' also covers, for example and if applicable to the particular claim element, a baseband integrated circuit or processor integrated circuit for a mobile device or a similar integrated circuit in server, a cellular network device, or other computing or network device.

Any of the processors mentioned in this text, in particular but not limited to processors 101 and 111 of FIGS. 8 and 9, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The wording "A, or B, or C, or a combination thereof' or "at least one of A, B and C" or "at least one of A, B or C" or "A, B, and/or C" may be understood to be not exhaustive and to include at least the following: (i) A, or (ii) B, or (iii) C, or (iv) A and B, or (v) A and C, or (vi) B and C, or (vii) A and B and C.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

It will be understood that the embodiments disclosed herein are only example, and that any feature presented for a particular example embodiment may be used with any aspect of the present disclosure on its own or in combination with any feature presented for the same or another particular example embodiment and/or in combination with any other feature not mentioned. It will further be understood that any feature presented for an example embodiment in a particular category may also be used in a corresponding manner in an example embodiment of any other category.

### List of abbreviations

- 3GPP: 3rd Generation Partnership Project
- ASN.1: Abstract Syntax Notation One
- CP: Control Plane
- DL: Downlink
- gNB: 5G Node-B
- LTE: Long-Term Evolution
- MAC: Medium Access Control
- NR: New Radio
- NW: Network
- PHY: Physical layer
- RAN: Radio Access Network
- RNA: RAN based Notification Area
- RNTI: Radio Network Temporary Identifier
- RRC: Radio Resource Control
- UE: User Equipment
- UL: Uplink
- UMTS: Universal Mobile Telecommunications System
- UP: User Plane

## Claims

1. An apparatus comprising:
- means for determining at least one radio resource configuration profile at least a part of which is to be retained by the apparatus in an inactive radio state of the apparatus;
- means for retaining at least a part of the at least one radio resource configuration profile in the inactive radio state of the apparatus; and
- means for discarding at least a part of at least one further radio resource configuration profile.

2. The apparatus of claim 1, wherein the means for retaining at least a part of the at least one radio resource configuration profile are configured for only retaining at least a part of the at least one radio resource configuration profile indicated to be retained.

3. The apparatus of any of claims 1 or 2, further comprising:
- means for determining at least one retention duration, wherein a respective one of the at least one radio resource configuration profile is to be retained for a respective one of the at least one retention duration,
- wherein the means for retaining at least a part of the at least one radio resource configuration profile are configured for retaining at least a part of a respective one of the at least one radio resource configuration profile for a respective one of the at least one retention duration.

4. The apparatus of any of claims 1 to 3, further comprising:
- means for determining at least one action to be performed by the apparatus in response to at least one retention duration of the at least one radio resource configuration profile having expired; and
- means for performing the at least one action in response to the at least one retention duration having expired.

5. The apparatus of claim 4, wherein the at least one action comprises at least one of:
- discarding at least a part of at least one of the at least one radio resource configuration profile, wherein a respective retention duration of the at least one of the at least one radio resource configuration profile has expired;
- indicating, to a network node, that the at least one retention duration has expired;
- determining at least one reselected frequency, the at least one reselected frequency being different from at least one currently selected frequency;
- determining at least one modified reselection priority, the at least one modified reselection priority being different from a current reselection priority; or
- modifying a measurement configuration of the apparatus.

6. The apparatus of any of claims 3 to 5, wherein the means for determining the at least one retention duration are configured for determining the at least one retention duration based on a mobility of the apparatus in the inactive radio state.

7. The apparatus of any of claims 3 to 6, further comprising:
- means for monitoring the at least one retention duration.

8. The apparatus of any of claims 3 to 7, wherein the means for determining at least one radio resource configuration profile are configured for determining the at least one radio resource configuration profile based on a number of means for monitoring the at least one retention duration and/or wherein the means for determining the at least one retention duration are configured for determining the at least one retention duration based on a number of means for monitoring the at least one retention duration.

9. The apparatus of any of claims 1 to 8, wherein the means for retaining at least a part of the at least one radio resource configuration profile are configured for retaining at least a part of the at least one radio resource configuration profile after the apparatus transitioned from a connected radio state to the inactive radio state.

10. The apparatus of any of claims 1 to 9, further comprising:
- means for indicating, to a network node, at least one retained radio resource configuration profile at least a part of which has been retained by the apparatus in the inactive radio state.

11. The apparatus of any of claims 1 to 10, further comprising:
- means for determining that at least a part of at least one retained radio resource configuration profile at least a part of which has been retained by the apparatus in the inactive radio state is to be discarded; and
- means for discarding at least a part of the at least one retained radio resource configuration profile having been determined to be discarded.

12. The apparatus of claim 11, wherein the at least one retained radio resource configuration profile is determined to be discarded based on a mobility of the apparatus in the inactive radio state.

13. The apparatus of any of claims 1 to 12, further comprising:
- means for indicating, to a network node, at least one retained radio resource configuration profile at least a part of which has been retained by the apparatus in the inactive radio state and further during an event associated with a mobility of the apparatus.

14. A method, performed by an apparatus, the method comprising:
- determining at least one radio resource configuration profile at least a part of which is to be retained by the apparatus in an inactive radio state of the apparatus;
- retaining at least a part of the at least one radio resource configuration profile in the inactive radio state of the apparatus; and
- discarding at least a part of at least one further radio resource configuration profile.

15. A computer program comprising instructions, which, when executed by an apparatus, cause the apparatus to perform the method of claim 14.

16. A computer-readable storage medium having stored thereon the computer program of claim 15.
